(19) Europäisches Patentamt
European Patent Office
Office européen des brevets

(11) **EP 1 748 165 B1**

(12) **EUROPEAN PATENT SPECIFICATION**

(45) Date of publication and mention
of the grant of the patent:
**04.03.2009 Bulletin 2009/10**

(51) Int Cl.:
*F01N 11/00* *(2006.01)*    *F02D 41/02* *(2006.01)*

(21) Application number: **06015480.4**

(22) Date of filing: **25.07.2006**

(54) **Catalyst diagnosis apparatus for internal combustion engines**

Katalysatordiagnoseapparat für eine Brennkraftmaschine

Dispositif diagnostique pour catalyseur d'un moteur à combustion interne

(84) Designated Contracting States:
**DE FR**

(30) Priority: **25.07.2005 JP 2005214569**

(43) Date of publication of application:
**31.01.2007 Bulletin 2007/05**

(73) Proprietor: **HITACHI, LTD.**
**Chiyoda-ku**
**Tokyo 100-8280 (JP)**

(72) Inventors:
• **Yamauchi, Shin,**
**Hitachi, Ltd.**
**Chiyoda-ku**
**Tokyo 100-8220 (JP)**
• **Iihoshi, Yoichi,**
**Hitachi, Ltd.**
**Chiyoda-ku**
**Tokyo 100-8220 (JP)**
• **Hori, Toshio,**
**Hitachi, Ltd.**
**Chiyoda-ku**
**Tokyo 100-8220 (JP)**
• **Kurashima, Yoshikuni,**
**Hitachi, Ltd.**
**Chiyoda-ku**
**Tokyo 100-8220 (JP)**

(74) Representative: **Beetz & Partner**
**Patentanwälte**
**Steinsdorfstrasse 10**
**80538 München (DE)**

(56) References cited:
EP-A- 0 773 355        EP-A2- 0 844 374
JP-A- 6 167 210        JP-A- 11 132 031
US-A1- 2002 178 714

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a catalyst diagnosis apparatus for internal combustion engines. More particularly, the present invention relates to a catalyst diagnosis apparatus for internal combustion engines, which diagnoses whether a three-way catalyst disposed in the exhaust passage of the internal combustion engine is degraded, and also relates to automobiles equipped with an internal combustion engine including the catalyst diagnosis apparatus.

2. Description of the Related Art

Three-way catalysts have hitherto been disposed midway the exhaust passage to purify and clean not-yet-burnt hydrocarbons (HC), carbon monoxide (CO), and nitrogen oxides (NOx), i.e., harmful components in exhaust gas exhausted from an internal combustion engine.

In such an exhaust gas cleaning device, if the three-way catalyst is degraded or failed for some reason, the efficiency of cleaning the harmful components is reduced, and the exhaust gas cannot be sufficiently cleaned. Therefore, various methods and devices for detecting characteristic changes in the cleaning ability of the three-way catalyst have been proposed in the past.

One example of related art for detecting characteristic changes in the exhaust cleaning ability of a three-way catalyst is proposed as a catalyst degradation detection device in which the occurrence of catalyst degradation is determined based on the output of an air-fuel ratio sensor disposed upstream of the three-way catalyst, and the output of an $O_2$-sensor disposed downstream of the catalyst, and determination of a catalyst deterioration based on the locus length of the sensors. The catalyst temperature is estimated to control execution of useless determination of the catalyst degradation and to permit the determination of the catalyst degradation with high accuracy even when the catalyst temperature is changed (see, e.g., JP-11-132031 A).

Because there are a region where the exhaust cleaning ability of the three-way catalyst depends on the catalyst temperature and a region where the exhaust cleaning ability of the three-way catalyst does not depend on the catalyst temperature, the catalyst degradation detection device disclosed in JP-11-132031 A is intended to estimate the catalyst temperature and to detect the catalyst degradation not only in the region where the exhaust gas cleaning ability of the three-way catalyst does not depend on the catalyst temperature, but also in the region where the exhaust cleaning ability of the three-way catalyst depends on the catalyst temperature.

More specifically, during feedback control of the air-fuel ratio, the occurrence of catalyst degradation is determined based on the output of the air-fuel ratio sensor disposed in an exhaust pipe upstream of the catalyst and the waveform length of the output of the oxygen sensor in the downstream side. At the same time, the current catalyst temperature is estimated based on the air mass taken into the internal combustion engine.

Further, a range allowing the determination of the catalyst degradation to be executed is set based on the estimated catalyst temperature, and the determination of the catalyst degradation is executed only when the air-fuel ratio of the exhaust gas flowing into the catalyst is within the allowable range.

JP 06-167 210 A discloses a catalytic activity detector system comprising oxygen concentration sensors arranged on the upstream side of catalysts and oxygen concentration sensors arranged on the downstream side of the catalysts. The air-fuel ratio feedback control is carried out on the basis of the detected signals from the upstream side oxygen concentration sensors. The output signals from the downstream side oxygen concentration sensors are used for detecting the catalytic activity of the catalysts by analyzing the fluctuation of their signals.

US 2002/0 178 714 A1 discloses a method of initializing a catalyst for monitoring the oxygen storage capacity (OSC) of the catalyst which is a measure for the conversion efficiency of the catalyst. For that purpose, the catalyst is first set to either a rich state or a lean state prior to measuring its OSC time.

SUMMARY OF THE INVENTION

When the degradation determination method using the catalyst temperature is actually performed like the catalyst degradation detection device disclosed in Patent Document 1, the following problems may occur.

The catalyst temperature is affected by external environmental factors, such as weather, atmospheric temperature, and humidity, during the operation of the internal combustion engine. Therefore, when the catalyst temperature is estimated from the intake air mass, this means that the catalyst temperature is estimated without considering influences of the external environment, for example. It is hence difficult to precisely detect the catalyst temperature.

Even in the case of using a temperature sensor, it is also difficult to precisely detect the catalyst temperature because the catalyst temperature is not evenly distributed within the catalyst. Uneven temperature distribution within the catalyst is attributable to the fact that the purification reaction for purifying and cleaning harmful substances takes place inside the catalyst around noble metals which are dispersively mixed in the catalyst.

Consequently, the estimated result of the catalyst temperature is varying, whereby the accuracy of the range allowing the determination of the catalyst degradation to be executed is deteriorated and so is the accuracy in the determination of the catalyst degradation.

With the view of solving the above-mentioned problems, an object of the present invention is to provide a catalyst diagnosis apparatus for internal combustion engines, which can perform the determination of the catalyst degradation with high accuracy in a manner adapted to influences of the external environment, etc.

The above problems are solved according to claim 1. The dependent claims relate to preferred embodiments of the present invention.

The catalyst diagnosis apparatus of the present invention for internal combustion engines including a three-way catalyst disposed in the exhaust passage, an air-fuel ratio sensor for detecting the air-fuel ratio in the exhaust gas upstream of the three-way catalyst, and an oxygen sensor for detecting the oxygen density in the exhaust gas downstream of the three-way catalyst, the catalyst diagnosis apparatus determining degradation of the three-way catalyst and comprises:

> an OSC indicator calculation unit for calculating an OSC indicator indicating the oxygen storage capacity (OSC) of the three-way catalyst based on the output of the air-fuel ratio sensor and the output of the oxygen sensor, and
> a catalyst degradation determination unit for determining a degradation of the three-way catalyst based on the OSC indicator calculated by the OSC indicator calculation unit,

characterized in that

- the catalyst diagnosis apparatus comprises a reaction rate calculation unit for calculating the reaction rate of a chemical reaction in the three-way catalyst based on the output of the oxygen sensor, and
- the catalyst degradation determination unit is adapted to determine a degradation of the three-way catalyst based on the reaction rate calculated by the reaction rate calculation unit and the OSC indicator calculated by the OSC indicator calculating unit.

In the catalyst diagnosis apparatus for the internal combustion engine according to the present invention, preferably, the OSC indicator calculation unit calculates the OSC indicator based on a response delay time from the time at which the output of the air-fuel ratio sensor is reversed from a rich state to a lean state, until the time at which the output of the oxygen sensor reaches a predetermined lean-determination threshold.

According to a preferred embodiment, the present invention also provides a catalyst diagnosis apparatus for internal combustion engines including, in an intake passage, an intake air mass detection unit for detecting the intake air mass and, in an exhaust passage, a three-way catalyst, a linear air-fuel ratio sensor for detecting the air-fuel ratio in the exhaust gas upstream of the three-way catalyst, and an oxygen sensor for detecting oxygen density or concentration in the exhaust gas downstream of the three-way catalyst, wherein the catalyst diagnosis apparatus comprises a center air-fuel ratio calculation unit for calculating a center air-fuel ratio based on outputs of the intake air mass detection unit, the linear air-fuel ratio sensor, and the oxygen sensor; an air-fuel ratio control unit for controlling the air-fuel ratio based on the outputs of the intake air mass detection unit, the linear air-fuel ratio sensor, the oxygen sensor, and the center air-fuel ratio calculation unit; a center air-fuel ratio determination unit for determining based on the output of the center air-fuel ratio calculation unit whether the center air-fuel ratio is correctly calculated; a reaction rate calculation unit for calculating a reaction rate of chemical reaction in the three-way catalyst based on the output of the oxygen sensor when the center air-fuel ratio determination unit determines that the center air-fuel ratio is correctly calculated; an OSC indicator calculation unit for calculating an OSC indicator indicating the oxygen storage capacity of the three-way catalyst based on the outputs of the linear air-fuel ratio sensor, the oxygen sensor, and the center air-fuel ratio calculation unit when the center air-fuel ratio determination unit determines that the center air-fuel ratio is correctly calculated; and a catalyst degradation determination unit for determining degradation of the three-way catalyst based on the reaction rate calculated by the reaction rate calculation unit and the OSC indicator calculated by the OSC indicator calculation unit.

In the catalyst diagnosis apparatus for internal combustion engines according to the present invention, preferably, the reaction rate calculation unit calculates the reaction rate before the OSC indicator calculation unit calculates the OSC indicator.

In the catalyst diagnosis apparatus for internal combustion engines according to the present invention, preferably, the calculation of the OSC indicator by the OSC indicator calculation unit is inhibited when the reaction rate calculated by the reaction rate calculation unit is not larger than a predetermined value.

In the catalyst diagnosis apparatus for internal combustion engines according to the present invention, preferably, the reaction rate calculation unit calculates the reaction rate based on a variation in the output of the oxygen sensor.

In the catalyst diagnosis apparatus for the internal combustion engine according to the present invention, preferably, the reaction rate calculation unit calculates the reaction rate based on at least one of parameters for the output of the oxygen sensor, including the amplitude, the standard deviation, the comparison result between a maximum value and a minimum value, and the number of times at which a peak value exceeds a predetermined range.

In the catalyst diagnosis apparatus for internal combustion engines according to the present invention, preferably, the center air-fuel ratio determination unit determines whether the center air-fuel ratio is correctly calculated, depending on whether the air-fuel ratio exceeds a predetermined control range with respect to the center air-fuel ratio calculated by the center air-fuel ratio calculation unit, and the calculation of the reaction rate by the reaction rate calculation unit is stopped when the air-fuel ratio exceeds the predetermined control range with respect to the center air-fuel ratio.

In the catalyst diagnosis apparatus for internal combustion engines according to the present invention, preferably, even after the air-fuel ratio has returned to the predetermined control range with respect to the center air-fuel ratio, the calculation of the reaction rate by the reaction rate calculation unit is continuously stopped until a predetermined time is lapsed from the time of returning to the predetermined control range.

The catalyst diagnosis apparatus for internal combustion engines according to the present invention preferably further comprises a reaction rate revision unit for revising the reaction rate calculated by the reaction rate calculation unit.

In the catalyst diagnosis apparatus for internal combustion engines according to the present invention, preferably, the reaction rate revision unit revises the reaction rate based on the difference between an average of the intake air mass during the calculation of the OSC indicator and an average of the intake air mass during the calculation of the reaction rate, and/or the difference between an average of fuel mass during the calculation of the OSC indicator and an average of the fuel mass during the calculation of the reaction rate.

Further, the present invention provides an automobile comprising an internal combustion engine including, in an intake passage, intake air mass detection unit for detecting intake air mass and, in an exhaust passage, a three-way catalyst, a linear air-fuel ratio sensor for detecting the air-fuel ratio in the exhaust gas upstream of the three-way catalyst, and an oxygen sensor for detecting the oxygen density in the exhaust gas downstream of the three-way catalyst, the internal combustion engine including a control unit, wherein the control unit comprises a center air-fuel ratio calculation unit for calculating a center air-fuel ratio based on the outputs of the intake air mass detection unit, the linear air-fuel ratio sensor, and the oxygen sensor; an air-fuel ratio control unit for controlling the air-fuel ratio based on the outputs of the intake air mass detection unit, the linear air-fuel ratio sensor, the oxygen sensor and the center air-fuel ratio calculation unit; a center air-fuel ratio determination unit for determining based on the output of the center air-fuel ratio calculation unit whether the center air-fuel ratio is correctly calculated; a reaction rate calculation unit for calculating the reaction rate of the chemical reactions in the three-way catalyst based on the output of the oxygen sensor when the center air-fuel ratio determination unit determines that the center air-fuel ratio is correctly calculated; an OSC indicator calculation unit for calculating an OSC indicator indicating the oxygen storage capacity of the three-way catalyst based on the outputs of the linear air-fuel ratio sensor, the oxygen sensor and the center air-fuel ratio calculation unit when the center air-fuel ratio determination unit determines that the center air-fuel ratio is correctly calculated; and a catalyst degradation determination unit for determining a degradation of the three-way catalyst based on the reaction rate calculated by the reaction rate calculation unit and the OSC indicator calculated by the OSC indicator calculation unit.

With the catalyst diagnosis apparatus for internal combustion engines according to the present invention, since the degradation of the three-way catalyst is determined based on a combination of the reaction rate calculated by the reaction rate calculation unit and the OSC indicator calculated by the OSC indicator calculation unit, the accuracy in the determination of the catalyst degradation is improved, and the usable region for degradation determination is enlarged depending on characteristic changes of the catalyst caused by influences of the external environment, etc. Hence, the performance of catalyst diagnosis is enhanced.

BRIEF DESCRIPTION OF THE DRAWINGS

Fig. 1 is an overall schematic view of a direct-injection internal combustion engine to which is applied a catalyst diagnosis apparatus according to the present invention;

Fig. 2 is a schematic view showing a catalyst diagnosis apparatus according to a first embodiment of the present invention and an outline of an internal combustion engine to which is applied the catalyst diagnosis apparatus;

Fig. 3 is a flowchart showing the operation flow of the catalyst diagnosis apparatus, shown in Fig. 2, according to the first embodiment;

Figs. 4(a)-4(d) are time charts obtained when the flowchart shown in Fig. 3 is executed;

Fig. 5 is a graph showing a practical example in which degradation determination of a three-way catalyst is executed by a catalyst degradation determination unit in the first embodiment shown in Fig. 2;

Fig. 6 is a graph showing the relationship between the reaction rate in the catalyst and the output variation of an oxygen sensor;

Fig. 7 is a graph for explaining the case where the amplitude of an oxygen sensor output is taken as the output variation;

Fig. 8 is a graph for explaining the case where the standard deviation of the oxygen sensor output is taken as the output variation;

Fig. 9 is a graph for explaining the case where the difference between a maximum value and a minimum value of the oxygen sensor output is taken as the output variation;

Fig. 10 is a graph for explaining the case where the number of times at which a peak value of the oxygen sensor output deviates from a predetermined range is taken as the output variation;

Fig. 11 is a schematic view showing a catalyst diagnosis apparatus according to a second embodiment of the present invention and an outline of an internal combustion engine to which is applied the catalyst diagnosis apparatus;

Fig. 12 is a flowchart showing the operation flow of the catalyst diagnosis apparatus according to the second embodiment;

Figs. 13(a)-13(d) are time charts obtained when the flowchart shown in Fig. 12 is executed;

Fig. 14 is a flowchart showing a center air-fuel ratio calculation routine executed by the center air-fuel ratio calculation unit in the second embodiment;

Figs. 15(a)-15(d) are time charts obtained when the flowchart shown in Fig. 14 is executed;

Fig. 16 is a flowchart showing a center air-fuel ratio determination routine executed by the center air-fuel ratio determination unit in the second embodiment;

Fig. 17 is a time chart obtained when the flowchart shown in Fig. 16 is executed;

Fig. 18 is a schematic view showing a catalyst diagnosis apparatus according to a third embodiment of the present invention and an outline of an internal combustion engine to which is applied the catalyst diagnosis apparatus;

Fig. 19 is a graph showing the relationship between the revision amount of the reaction rate and the intake air mass;

Fig. 20 is a flowchart showing the operation flow of the catalyst diagnosis apparatus according to the third embodiment, and

Figs. 21(a)-21(e) are time charts obtained when the flowchart shown in Fig. 20 is executed.

DESCRIPTION OF PREFERRED EMBODIMENTS

Embodiments of a catalyst diagnosis apparatus for an internal combustion engine according to the present invention will be described in detail below with reference to the drawings.

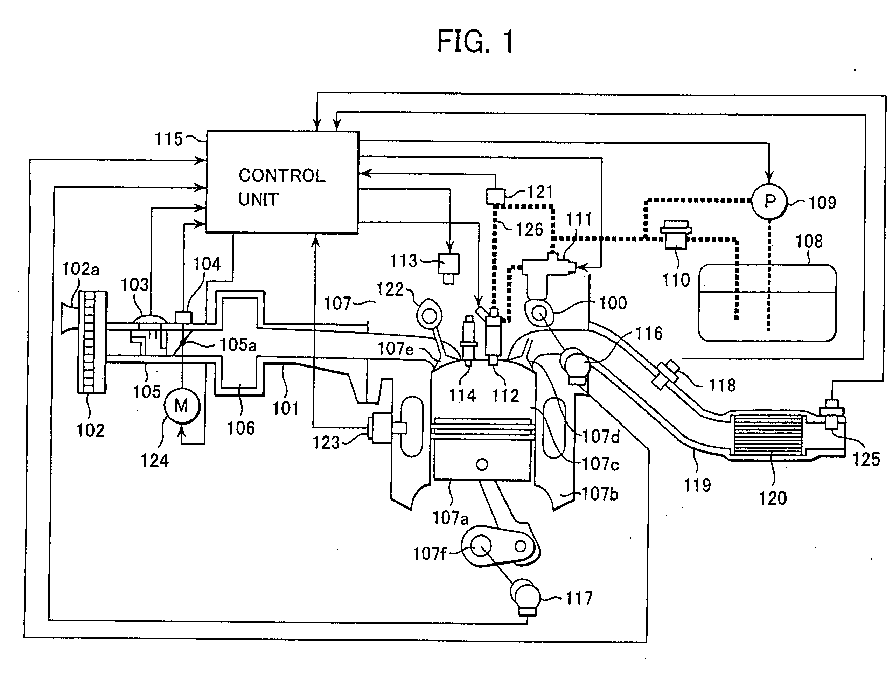

Fig. 1 is an overall schematic view of a direct-injection internal combustion engine to which is applied the catalyst diagnosis apparatus according to the present invention.

In Fig. 1, a direct-injection internal combustion engine 107 is installed in an automobile. Intake air introduced to a cylinder 107b of the direct-injection internal combustion engine 107 is taken in from the inlet 102a of an air cleaner 102. The intake air passes an airflow sensor 103 which is one of units for measuring the operating state of the internal combustion engine 107, and enters a collector 106 through a throttle body 105 in which is disposed an electronically controlled throttle valve 105a for controlling the intake air mass.

The air flow sensor 103 outputs a signal representing the intake air mass to a control unit 115 which serves as an internal combustion engine controller.

Mounted to the throttle body 105 is a throttle sensor 104 which is one of the engine operating-state measuring units and detects the opening of the electronically controlled throttle valve 105a. A signal from the throttle sensor 104 is also outputted to the control unit 115.

The air taken into the collector 106 is distributed to respective intake pipes 101 connected to the cylinders 107b of the internal combustion engine 107 and is introduced into a combustion chamber 107c of each cylinder 107b.

On the other hand, fuel such as gasoline supplied from a fuel tank 108 is subjected to primary pressurization by a fuel pump 109 and is regulated to a certain pressure by a fuel pressure regulator 110. Further, the fuel is subjected to secondary pressurization by a high-pressure fuel pump 111 to have a higher pressure and is sent to a common rail 126 under the high pressure.

The high-pressure fuel in the common rail 126 is injected into the combustion chamber 107c from an injector 112 which is mounted to each cylinder 107b. The fuel injected into the combustion chamber 107c is ignited by an ignition plug 114 in accordance with an ignition signal generated as a high-voltage signal through an ignition coil 113.

A cam angle sensor 116 is mounted to the cam shaft 100 of an exhaust valve 107d of the internal combustion engine 107 and outputs a signal for detecting the phase of the cam shaft 100 to the control unit 115. The cam angle sensor 116 may also be mounted to the cam shaft 122 of an intake valve 107e.

A crank angle sensor 117 is mounted to detect the rotation and phase of the crankshaft 107f. The output of the crank angle sensor 117 is also inputted to the control unit 115.

A three-way catalyst 120 is disposed midway the exhaust pipe 119. A linear air-fuel ratio sensor 118 is disposed upstream of the three-way catalyst 120, and an oxygen sensor 125 is disposed downstream of the three-way catalyst 120.

The linear air-fuel ratio sensor 118 detects oxygen (air-fuel ratio) in the exhaust gas flowing into the three-way catalyst 120 and outputs a detected signal to the control unit 115.

The oxygen sensor 125 detects the oxygen density in the exhaust gas flowing out from the three-way catalyst 120 and outputs a detected signal to the control unit 115.

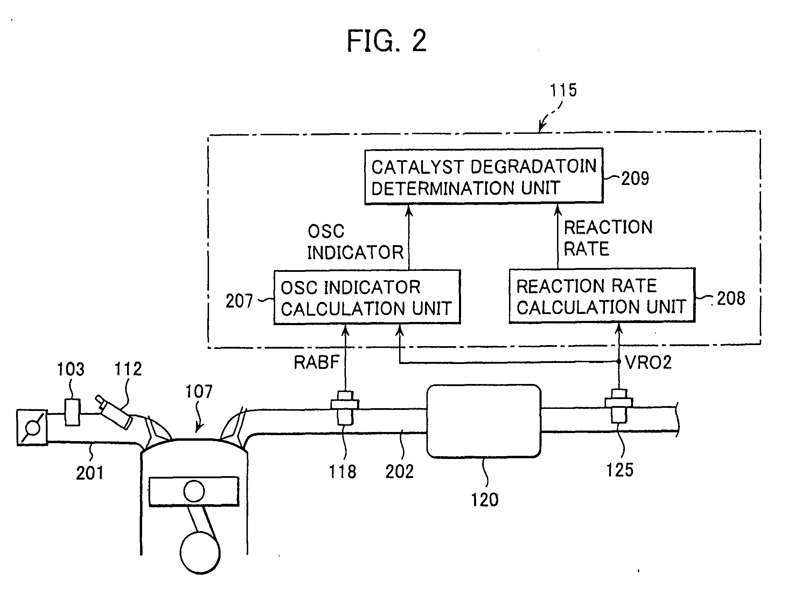

While the embodiment is described in connection with the direct-injection internal combustion engine, the internal combustion engine to which is applicable the catalyst diagnosis apparatus of the present invention is not limited to the direct-injection type. For example, the present invention can also be applied to a port-injection internal combustion engine (see Fig. 2) in which the injector 112 is mounted to an intake port.

With reference to Fig. 2, the following description is made of a catalyst diagnosis apparatus according to a first embodiment of the present invention and an outline of an internal combustion engine to which is applied the catalyst diagnosis apparatus.

In an intake passage 201 of the internal combustion engine 107, the airflow sensor 103 is disposed as an intake air mass detection unit for detecting the intake air mass.

The three-way catalyst 120 is disposed midway in an exhaust passage 202 of the internal combustion engine 107. Looking at the exhaust passage 202 in the direction of flow of exhaust gas therein, the linear air-fuel ratio sensor 118 for detecting the air-fuel ratio in the exhaust gas is disposed upstream of the three-way catalyst 120, and the oxygen sensor 125 for detecting the oxygen density in the exhaust gas is disposed downstream of the three-way catalyst 120.

The control unit 115 is constituted by a microcomputer and executes computer programs in accordance with software to implement the functions of an OSC indicator calculation unit 207, a reaction rate calculation unit 208, and a catalyst degradation determination unit 209, thereby realizing the catalyst diagnosis apparatus.

The OSC indicator calculation unit 207 calculates the OSC (Oxygen Storage Capacity) of the three-way catalyst 120 based on the output RABF of the linear air-fuel ratio sensor 118 and the output VRO2 of the oxygen sensor 125.

The reaction rate calculation unit 208 calculates the reaction rate in the three-way catalyst 120 based on the output VRO2 of the oxygen sensor 125. More specifically, the reaction rate calculation unit 208 calculates the reaction rate based on at least one of parameters related to the output VR02 of the oxygen sensor 125, i.e., the amplitude, the standard deviation, the comparison result between a maximum value and a minimum value, and the number of times at which a peak value exceeds a predetermined range. The reaction rate calculation unit 208 executes the calculation of the reaction rate prior to the calculation of an OSC indicator by the OSC indicator calculation unit 207.

This embodiment is featured in providing the catalyst degradation determination unit 209 which performs determination of catalyst degradation by using the outputs of the OSC indicator calculation unit 207 and the reaction rate calculation unit 208.

The OSC indicator calculation unit 207 calculates the OSC indicator of the three-way catalyst 120 based on the outputs of the linear air-fuel ratio sensor 118 and the oxygen sensor 125. Practically, the OSC indicator calculation unit 207 calculates the OSC indicator based on the response delay time from the time at which the output of the linear air-fuel ratio sensor 118 is reversed from a rich state to a lean state, until the time at which the output of the oxygen sensor 125 reaches a predetermined lean-determination threshold.

Thus, since the comparison of the OSC indicator is performed depending on the reaction rate in the catalyst, the OSC indicator can be calculated while change of the catalyst characteristics caused by influences of external environments, etc. is detected as change of the reaction rate. As a result, the determination of the catalyst degradation can be performed in a manner adapted to the influences of the external environment, etc.

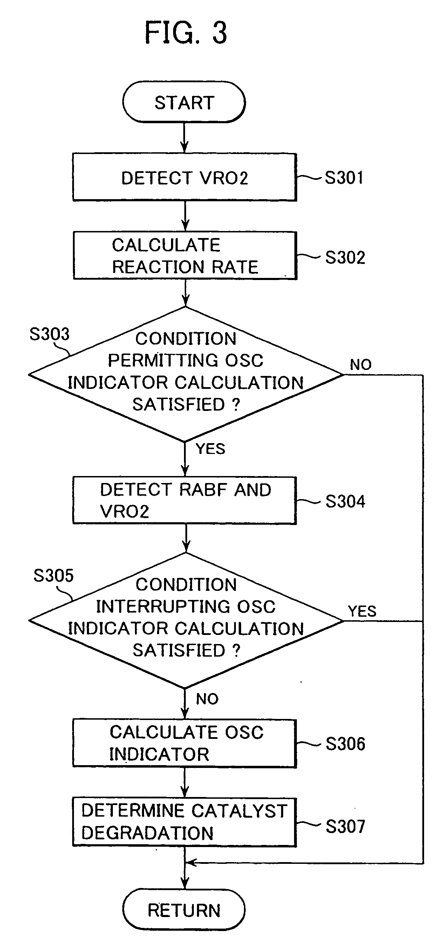

The operation flow of the catalyst diagnosis apparatus according to the first embodiment will be described below with reference to the flowchart shown in Fig. 3.

First, the voltage of the oxygen detector 125 (i.e., the oxygen sensor output VRO2) disposed downstream of the three-way catalyst 120 is detected (step S301).

Then, the detected oxygen sensor output VRO2 is subjected to buffering. Based on data obtained after the buffering for a predetermined time, the reaction rate calculation unit 208 calculates the reaction rate (step S302). In this embodiment, the predetermined buffering time is set to 3-10 seconds. The predetermined buffering time is optionally selected depending on the desired requirements, e.g., calculation accuracy and calculation time. If a higher calculation accuracy is required, the buffering may be executed for a period of longer than 10 s, and if a shorter calculation time is required, the buffering may be executed for a period of shorter than 3 s. Note that the reaction rate calculation is interrupted when the time of detecting VR02 is under the fuel-cut mode.

Then, it is determined as to whether a condition permitting the OSC indicator calculation is satisfied (step S303). If the permitting condition is satisfied, the control process advances to step S305 and so on, while if not satisfied, the control process is brought to an end. The permitting condition includes, for example, that the reaction rate is larger than a predetermined value, and that abnormal conditions of the linear air-fuel ratio sensor 118, etc. are not present.

If the permitting condition is satisfied, the output of the linear air-fuel ratio sensor 118 upstream of the three-way catalyst 120 (i.e., the air-fuel ratio sensor output RABF) and the oxygen sensor output VRO2 are detected (step S304).

Then, it is determined as to whether a condition interrupting the OSC indicator calculation is satisfied (step S305). If the interrupting condition is not satisfied, the control process advances to step S306 and so on, while if satisfied, the control process is brought to an end. The interrupting condition includes, for example, that the time of detecting RABF and VRO2 is under the fuel-cut mode. Note that, if the condition interrupting the OSC indicator calculation is satisfied, the OSC indicator may be reset to zero or a predetermined value.

If the condition interrupting the OSC indicator calculation is not satisfied, the OSC indicator calculation unit 207 calculates the OSC indicator based on the detected air-fuel ratio sensor output RABF and oxygen sensor output VRO2 (step S306).

Finally, the degradation of the three-way catalyst 120 is determined by the catalyst degradation determination unit 209 based on the reaction rate and the OSC indicator (step S307), which are both detected through the above-described steps.

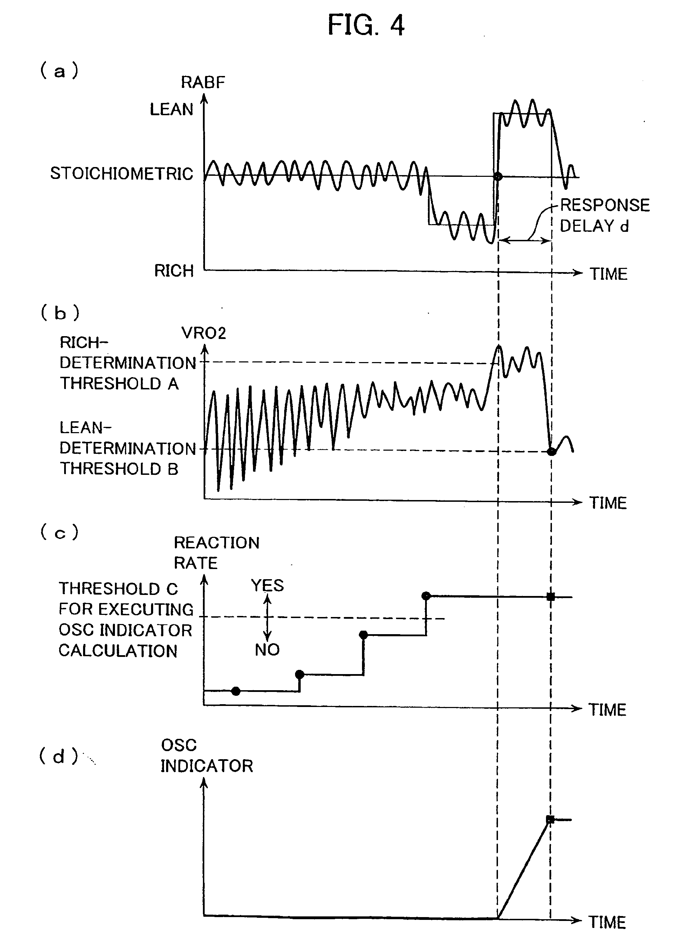

Figs. 4(a)-4(d) show, by way of example, time charts obtained when the flowchart shown in Fig. 3 is executed. Figs. 4(a)-4(d) represent respectively the air-fuel ratio sensor output RABF, the oxygen sensor output VRO2, the reaction rate, and the OSC indicator.

When the variation of the oxygen sensor output VRO2 is reduced, the reaction rate is increased. At the time when the reaction rate exceeds a threshold C for executing the calculation of the OSC indicator, the calculation of the OSC indicator is started.

When the calculation of the OSC indicator is completed, the degradation of the three-way catalyst 120 is determined based on the value indicated by a mark ■ in Fig. 4(d). The OSC indicator is calculated by utilizing the fact that a response delay occurs between the air-fuel ratio sensor output RABF and the oxygen sensor output VRO2 by the action of the OSC, and by detecting the response delay between them.

More specifically, the air-fuel ratio is first controlled such that the air-fuel ratio sensor output RABF takes a certain rich level. Then, the air-fuel ratio is controlled such that the air-fuel ratio sensor output RABF is reversed to a certain lean level immediately after the oxygen sensor output VRO2 exceeds a rich-determination threshold A.

As a result, the air-fuel ratio sensor output RABF is reversed from the rich state to the lean state at once. However, because the catalyst interior is in the rich state, i.e., in the oxygen exhausted state, there occurs a response delay time d until the catalyst interior is saturated with oxygen and the oxygen sensor output VRO2 is returned to a lean-determination threshold B. The OSC indicator is calculated based on the response delay time d. The OSC indicator is obtained by multiplying the response delay time d by a proportional coefficient k (i.e., k·d).

In this embodiment, the response delay time d is defined as the period from the time at which the air-fuel ratio sensor output RABF exceeds a stoichiometric level in the course of reversing from the rich stat to the lean state until the time at which the oxygen sensor output VRO2 is reduced to the lean-determination threshold B.

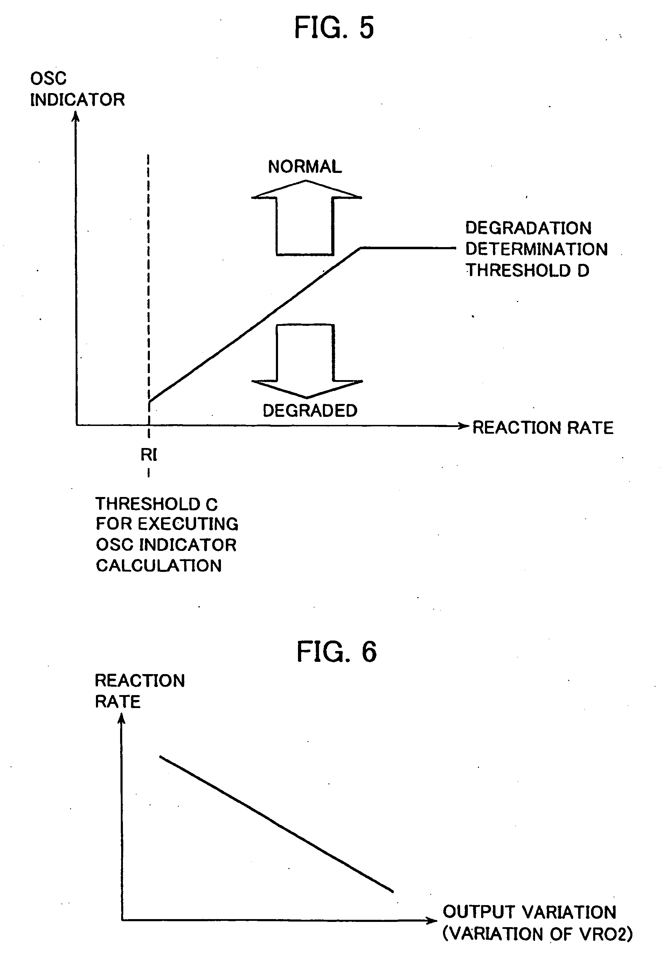

Fig. 5 is a graph showing a practical example in which the degradation determination of the three-way catalyst 120 is executed by the catalyst degradation determination unit 209 based on the reaction rate and the OSC indicator.

In this embodiment, a degradation determination threshold D is set depending on the reaction rate. If the OSC indicator is in a region larger than the threshold D, the three-way catalyst 120 is determined to be normal, and if the OSC indicator is in a region smaller than the threshold D, the three-way catalyst 120 is determined to be in the degraded state.

When the reaction rate is not larger than the threshold C for executing the calculation of the OSC indicator, the catalyst is not activated and the difference between the normal state and the degraded state does not appear in the OSC indicator. Thus, the degradation determination cannot be executed. For that reason, the reaction rate at a limit in the determination between the normal state and the degraded state is set to R1 and used as the threshold C for executing the calculation of the OSC indicator.

Fig. 6 shows, by way of example, the relationship between the output variation of the oxygen sensor 125 (i.e., the variation of VR02) and the reaction rate in the catalyst.

When the output variation of the oxygen sensor 125 is large, this means that oxygen flows out downstream of the three-way catalyst 120. Thus, the reaction rate in the catalyst is small. On the other hand, when the output variation is small, this means that oxygen flows out in a small amount. Thus, the reaction rate in the catalyst is large. By utilizing such a tendency, the reaction rate is calculated based on the output variation of the oxygen sensor 125.

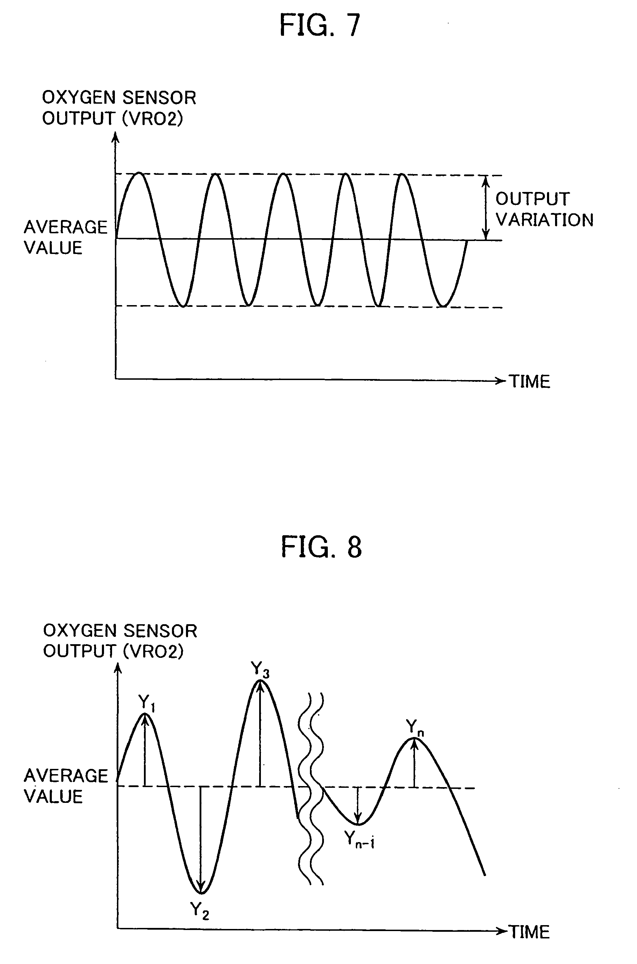

Figs. 7-10 each show, by way of example, the output variation of the oxygen sensor 125.

Fig. 7 shows the case where the output amplitude of the oxygen sensor 125 is taken as the output variation.

Fig. 8 shows the case where the standard deviation of the output (Y) of the oxygen sensor 125 is taken as the output variation. The standard deviation can be obtained from the following formula:

$$\text{standard deviation} = \sqrt{\{n\textstyle\sum Y2 - (\textstyle\sum Y)2/n(n-1)\}}$$

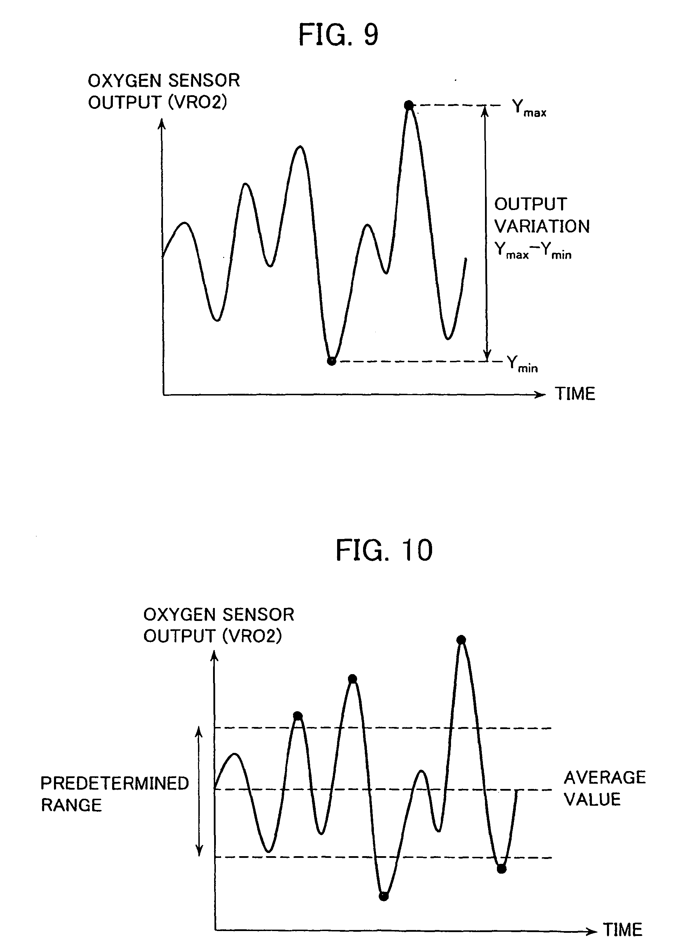

Fig. 9 shows the case where the difference between a maximum value Ymax and a minimum value Ymin of the output of the oxygen sensor 125 is taken as the output variation.

Fig. 10 shows the case where the number of times at which a peak value of the output of the oxygen sensor 125 deviates from a predetermined range is taken as the output variation.

Among the examples shown in Figs. 7-10, plural ones may be used as the output variation in a combined manner.

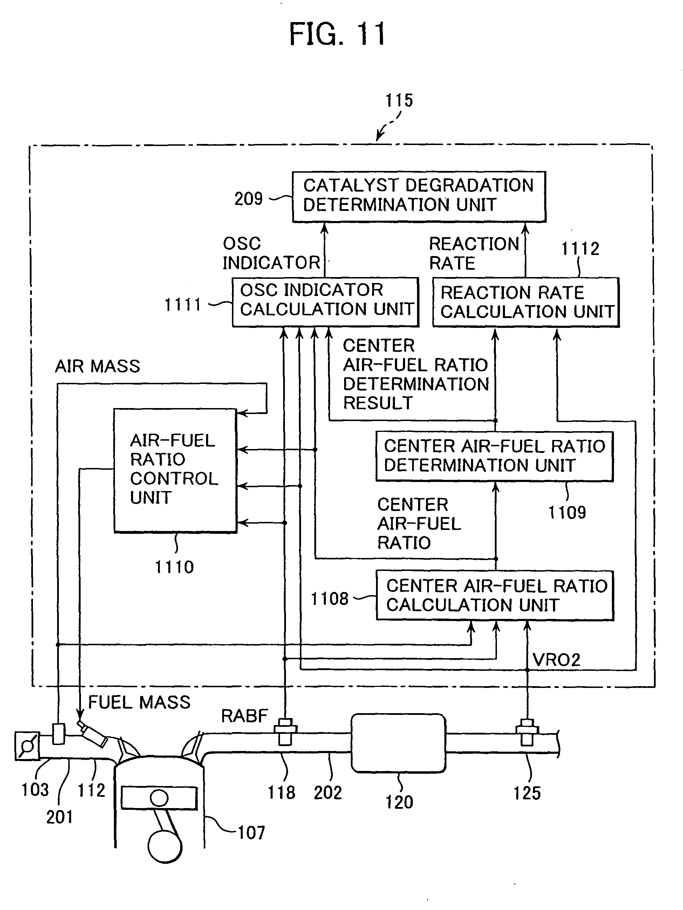

With reference to Fig. 11, the following description is made of a catalyst diagnosis apparatus according to a second embodiment of the present invention and an outline of an internal combustion engine to which is applied the catalyst diagnosis apparatus. Note that components in Fig. 11 corresponding to those in Fig. 2 are denoted by the same reference numerals and a description thereof is omitted here.

In this embodiment, the control unit 115 executes computer programs in accordance with software to implement the functions of a center air-fuel ratio calculation unit 1108, a center air-fuel ratio determination unit 1109, an air-fuel ratio control unit 1110, an OSC indicator calculation unit 1111, a reaction rate calculation unit 1112, and a catalyst degradation determination unit 209, thereby realizing the catalyst diagnosis apparatus.

In this embodiment, because the center air-fuel ratio calculation unit 1108, the center air-fuel ratio determination unit 1109, and the air-fuel ratio control unit 1110 are added, the accuracy of calculations in the OSC indicator calculation unit 1111 and the reaction rate calculation unit 1112 is further improved and the determination of the catalyst degradation can be performed with higher accuracy.

The center air-fuel ratio calculation unit 1108 calculates the center air-fuel ratio based on the oxygen sensor output VRO2, the air-fuel ratio sensor output RABF, and the output of the airflow sensor 103 for measuring the air mass taken into the internal combustion engine 107.

Based on the calculated center air-fuel ratio, the center air-fuel ratio determination unit 1109 determines whether the air-fuel ratio control is performed in the vicinity of the center air-fuel ratio. In other words, the center air-fuel ratio determination unit 1109 determines based on the output of the center air-fuel ratio calculation unit 1108 whether the center air-fuel ratio is correctly calculated.

In order to control the air-fuel ratio, the air-fuel ratio control unit 1110 calculates fuel mass based on the oxygen sensor output VRO2, the air-fuel ratio sensor output RABF, the center air-fuel ratio, and the intake air mass, thereby controlling the fuel mass injected from a fuel injection device, i.e., the injector.

The reaction rate calculation unit 1112 calculates the reaction rate of chemical reaction in the three-way catalyst 120 based on the output VRO2 of the oxygen sensor 125 only when it is determined by the center air-fuel ratio determination unit 1109 that the center air-fuel ratio is correctly calculated. As in the above-described embodiment, the reaction rate calculation unit 1112 calculates the reaction rate based on at least one of parameters related to the output VRO2 of the oxygen sensor 125, i.e., the amplitude, the standard deviation, the comparison result between a maximum value and a minimum value, and the number of times at which a peak value exceeds a predetermined range.

The OSC indicator calculation unit 1111 calculates the OSC indicator of the three-way catalyst 120 based on the respective outputs of the linear air-fuel ratio sensor 118, the oxygen sensor 125, and the center air-fuel ratio calculation unit 1108 only when it is determined by the center air-fuel ratio determination unit 1109 that the center air-fuel ratio is correctly calculated.

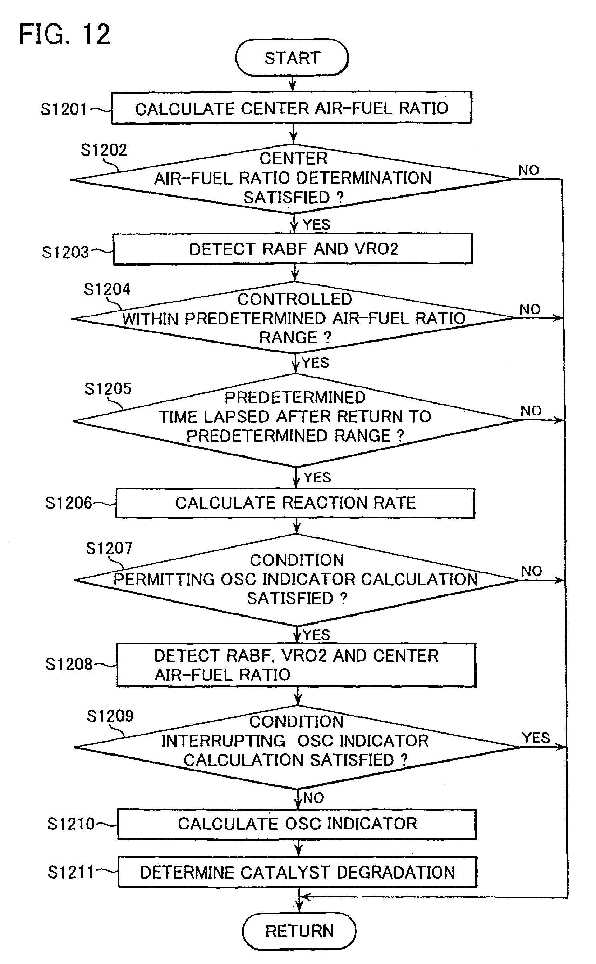

The operation flow of the catalyst diagnosis apparatus according to the second embodiment will be described below with reference to the flowchart shown in Fig. 12.

First, the center air-fuel ratio calculation unit 1108 calculates the center air-fuel ratio based on the oxygen sensor output VRO2, the air-fuel ratio sensor output RABF, and the intake air mass (step S1201).

Then, the center air-fuel ratio determination unit 1109 determines whether the determination of the center air-fuel ratio is satisfied (step S1202). If the determination of the center air-fuel ratio is satisfied, the control process advances to step S1203 and so on, while, if not satisfied, the control process is brought to an end. The condition for the determination of the center air-fuel ratio will be described in detail below.

If the determination of the center air-fuel ratio is satisfied, the air-fuel ratio sensor output RABF and the oxygen sensor output VRO2 are detected (step S1203).

Then, it is determined as to whether the air-fuel ratio sensor output RABF is controlled within a predetermined control range of the air-fuel ratio (step S1204). If so controlled, the control process advances to step S1205 and so on, while if not so satisfied, the control process is brought to an end. In this embodiment, the predetermined control range of the air-fuel ratio is set to a range of $\pm$ 0.5 from the center air-fuel ratio.

If the air-fuel ratio sensor output RABF is controlled within the predetermined control range of the air-fuel ratio, it is then determined as to whether a predetermined time is lapsed after the air-fuel ratio has deviated from the predetermined control range of the air-fuel ratio and has returned to it (step S1205). If the predetermined time is lapsed, the control process advances to step S1206 and so on, while, if not lapsed, the control process is brought to an end.

If it is determined that the predetermined time is lapsed after the air-fuel ratio has deviated from the predetermined control range of the air-fuel ratio and has returned to it, the detected oxygen sensor output VRO2 is subjected to buffering. Based on data obtained after the buffering for a predetermined time, the reaction rate calculation unit 1112 calculates the reaction rate (step S1206). In this embodiment, the predetermined buffering time is set to 3-10 seconds. The predetermined buffering time is optionally selected depending on the desired requirements, e.g., calculation accuracy and calculation time. If higher calculation accuracy is required, the buffering may be executed for a period of longer than 10 s, and if a shorter calculation time is required, the buffering may be executed for a period of shorter than 3 s. Note that the reaction rate calculation is interrupted when the time of detecting VRO2 is under the fuel-cut mode.

Then, it is determined as to whether a condition permitting the OSC indicator calculation is satisfied (step S1207). If the permitting condition is satisfied, the control process advances to step S1208 and so on, while if not satisfied, the control process is brought to an end. The permitting condition includes, for example, that the reaction rate is larger than a predetermined value, and that abnormal conditions of the linear air-fuel ratio sensor 118, etc. are not satisfied.

If the permitting condition is satisfied, the air-fuel ratio sensor output RABF, the oxygen sensor output VRO2, and the center air-fuel ratio are detected with respect to the three-way catalyst 120 (step S1208).

Then, it is determined as to whether a condition interrupting the OSC indicator calculation is satisfied (step S1209). If the interrupting condition is not satisfied, the control process advances to step S1210 and so on, while, if satisfied, the control process is brought to an end. The interrupting condition includes, for example, that the time of detecting RABF and VRO2 is under the fuel-cut mode. Note that, if the condition interrupting the OSC indicator calculation is satisfied, the OSC indicator may be reset to zero or a predetermined value.

If the condition interrupting the OSC indicator calculation is not satisfied, the OSC indicator calculation unit 1111 calculates the OSC indicator based on the detected air-fuel ratio sensor output RABF, oxygen sensor output VRO2, and center air-fuel ratio (step S1210).

Finally, the degradation of the three-way catalyst 120 is determined by the catalyst degradation determination unit 209 based on the reaction rate and the OSC indicator (step 1211), which are both detected through the above-described steps.

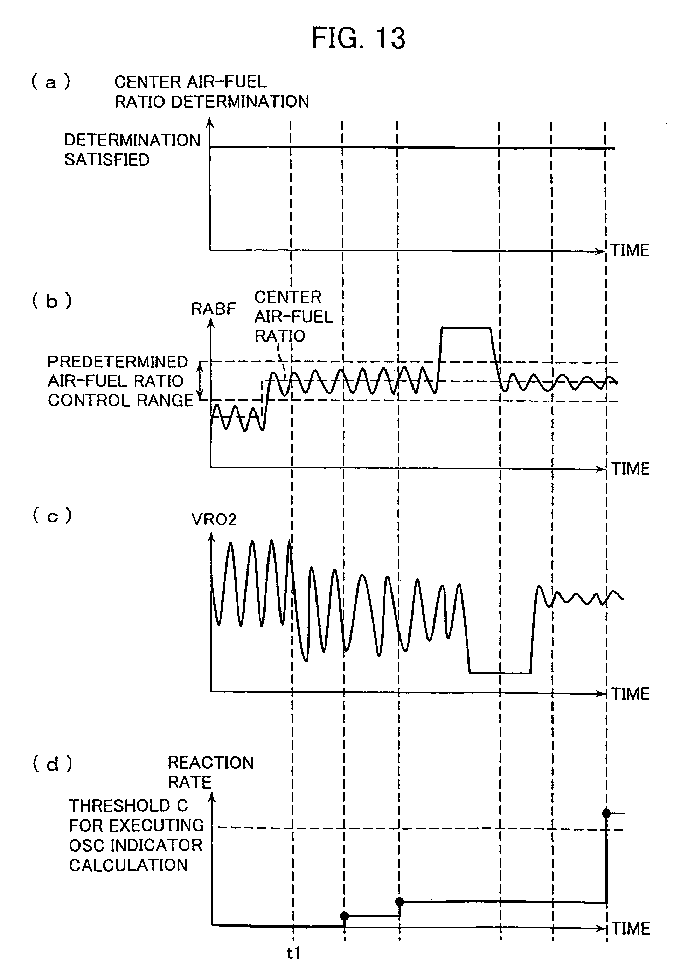

Figs. 13(a)-13(d) show, by way of example, time charts when the flowchart shown in Fig. 12 is executed. Figs. 13(a)-13(d) represent respectively the determination result of the center air-fuel ratio, the air-fuel ratio sensor output RABF, the oxygen sensor output VRO2, and the reaction rate.

If any new revision is not made for a predetermined time from the previous revision of the air-fuel ratio, the determination of the center air-fuel ratio is satisfied at a time t1.

During a period in which the determination of the center air-fuel ratio is satisfied, the reaction rate is calculated. If the determination of the center air-fuel ratio is not satisfied, or if the air-fuel ratio sensor output RABF exceeds a predetermined range of the air-fuel ratio, the calculation of the reaction rate is interrupted.

Also, if the air-fuel ratio sensor output RABF is returned again to the predetermined range of the air-fuel ratio after exceeding the predetermined range of the air-fuel ratio, the calculation of the reaction rate is not performed for a predetermined time, taking into account the delay of the oxygen sensor output VRO2 with respect to the air-fuel ratio sensor output RABF.

In this embodiment, when the air-fuel ratio sensor output RABF intersects again the center air-fuel ratio after exceeding the predetermined range of the air-fuel ratio, the intersection of the center air-fuel ratio is regarded as meaning that the air-fuel ratio sensor output RABF has returned to the predetermined range of the air-fuel ratio. The above-mentioned predetermined time is set to 3-10 s from the intersection time. That predetermined time may be set, as required, to be shorter than 3 s or longer than 10 s. Alternatively, a predetermined range is set for the value of the oxygen sensor output VRO2, and the above-mentioned predetermined time may be given as the time required for the oxygen sensor output VRO2 to converge into the predetermined range after the air-fuel ratio sensor output RABF has returned to the predetermined range of the air-fuel ratio. After the reaction rate exceeds the threshold C for executing the calculation of the OSC indicator, the calculation of the OSC indicator is executed.

The time charts in subsequent steps are the same as those in the first embodiment shown in Fig. 4.

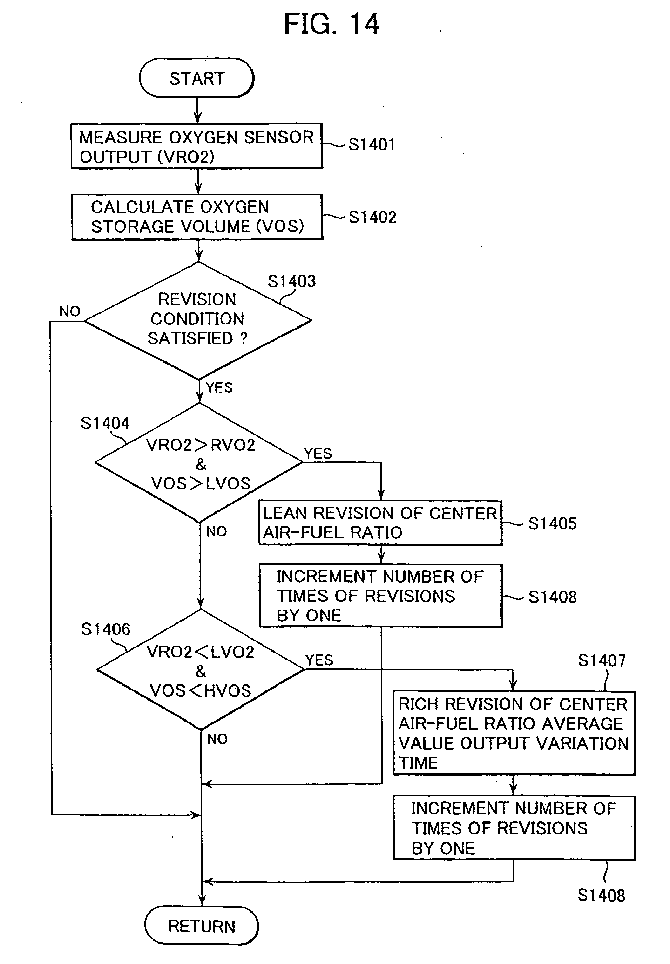

A center air-fuel ratio calculation routine executed by the center air-fuel ratio calculation unit 1108 will be described below with reference to the flowchart shown in Fig. 14.

First, the voltage of the oxygen sensor 125 (i.e., the oxygen sensor output VRO2) is measured (step S1401).

Then, the oxygen storage volume (VOS) is calculated based on the air-fuel ratio sensor output RABF, the intake air mass, and the center air-fuel ratio (step S1402). In this embodiment, VOS is calculated based on VOS = intake air mass x (RABF - center air-fuel ratio).

Then, it is determined as to whether a revision condition for the center air-fuel ratio is satisfied (step S1403). If the revision condition for the center air-fuel ratio is satisfied, the control process advances to step S1404 and so on, while if not satisfied, the control process is brought to an end. The revision condition for the center air-fuel ratio is satisfied includes, for example, that the voltage VRO2 of the oxygen sensor 125 is longer than a predetermined time (30 s), is smaller than a rich-determination voltage RVO2, and is larger than a lean-determination voltage LV02.

Then, based on the oxygen storage volume at the time when the air-fuel ratio after the catalyst has become rich, it is determined as to whether a revision of the center air-fuel ratio (i.e., a lean revision) is performed (step S1404). More specifically, if the oxygen sensor voltage VRO2 is larger than the rich-determination voltage RVO2 and the oxygen storage volume VOS is larger than an oxygen storage volume level LVOS for rich-determination, the control process advances to step S1405 for the lean revision, while if not so, the control process advances to step S1406.

If it is determined that the lean revision of the center air-fuel ratio is to be performed, the lean revision of the center air-fuel ratio is performed to revise a shift of the center air-fuel ratio to the rich side (step S1405).

On the other hand, if it is not determined that the lean revision of the center air-fuel ratio is to be performed, whether to perform a revision of the center air-fuel ratio (i.e., a rich revision) or not is determined based on the oxygen storage volume at the time when the air-fuel ratio after the catalyst has become lean (step S1406). More specifically, if the voltage VRO2 of the oxygen sensor 125 is smaller than the lean-determination voltage LV02, and the oxygen storage volume VOS is smaller than an oxygen storage volume level HVOS for lean-determination, the control process advances to step S1407 for the rich revision, while if not so, the control process is brought to an end.

If it is determined that the rich revision of the center air-fuel ratio is to be performed, the rich revision of the center air-fuel ratio is performed to revise a shift of the center air-fuel ratio to the lean side.

Each of revision amounts used in steps S1405 and S1407 may be always set to the same predetermined value or may be set to a value proportional to the difference between LVOS or HVOS and VOS. Also, those revision amounts may be set to meet (lean-revision amount < rich-revision amount) with the view of increasing sensitivity for preventing a deterioration regarding NOx, or conversely to meet (lean-revision amount > rich-revision amount) with the view of increasing sensitivity for preventing a deterioration in view of HC and CO.

The air-fuel ratio obtained after the revision in the above-described steps is given as the calculated value of the center air-fuel ratio. Further, whenever the rich or lean revision is performed, the number of times of revisions is incremented by one (step S1408).

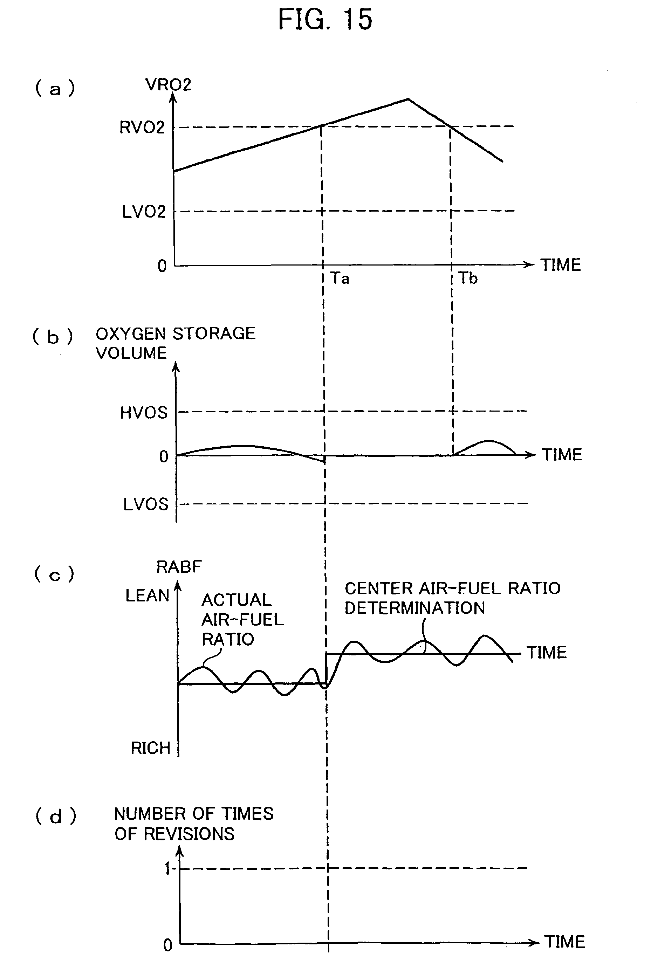

Figs. 15(a)-15(d) show, by way of example, time charts when the flowchart shown in Fig. 14 is executed. Figs. 15(a)-15(d) represent respectively the oxygen sensor output VRO2, the oxygen storage capacity (OSC), the air-fuel ratio sensor output RABF, and the number of times of revisions.

When the oxygen sensor output VRO2 exceeds the rich-determination voltage RVO2 at a time Ta, the oxygen storage volume is larger than the oxygen storage volume level LVOS for rich-determination. Therefore, the rich revision of the center air-fuel ratio is performed and the number of times of revisions is incremented by one. Also, the oxygen storage volume is reset to 0 until a time Tb at which VRO2 is reduced to RVO2.

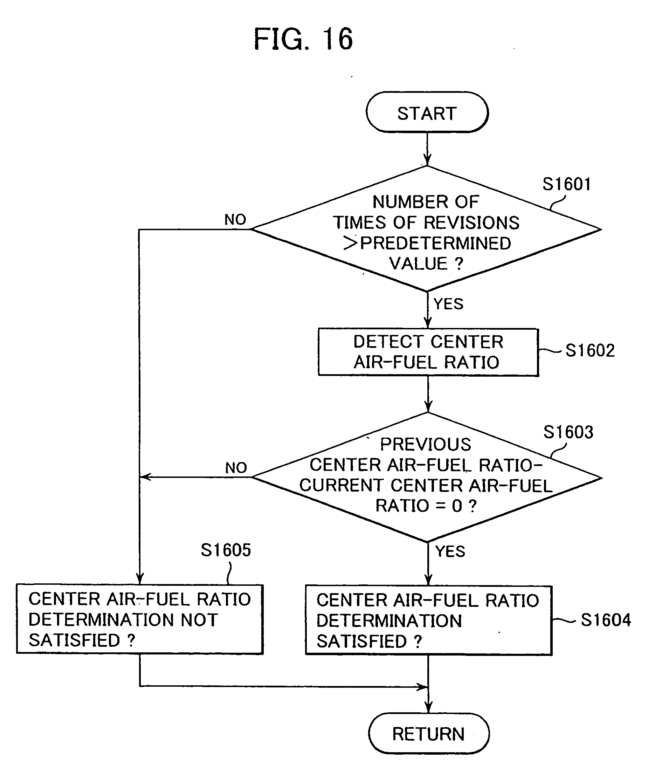

A center air-fuel ratio determination routine executed by the center air-fuel ratio determination unit 1109 will be described below with reference to the flowchart shown in Fig. 16.

First, it is determined as to whether the number of times of revisions is larger than a predetermined value (step S1601). If the number of times of revisions is larger than the predetermined value, the control process advances to step S1602 and so on, while if it is not larger than the predetermined value, the determination of the center air-fuel ratio is judged as being not satisfied (step S1605).

If the number of times of revisions is larger than the predetermined value, the center air-fuel ratio is detected (step S1602) and the difference between the previous center air-fuel ratio and the current center air-fuel ratio is calculated (step S1603). If that difference is 0, the determination of the center air-fuel ratio is judged as being satisfied (step S1604). Otherwise, the determination of the center air-fuel ratio is judged as being not satisfied (step S1605).

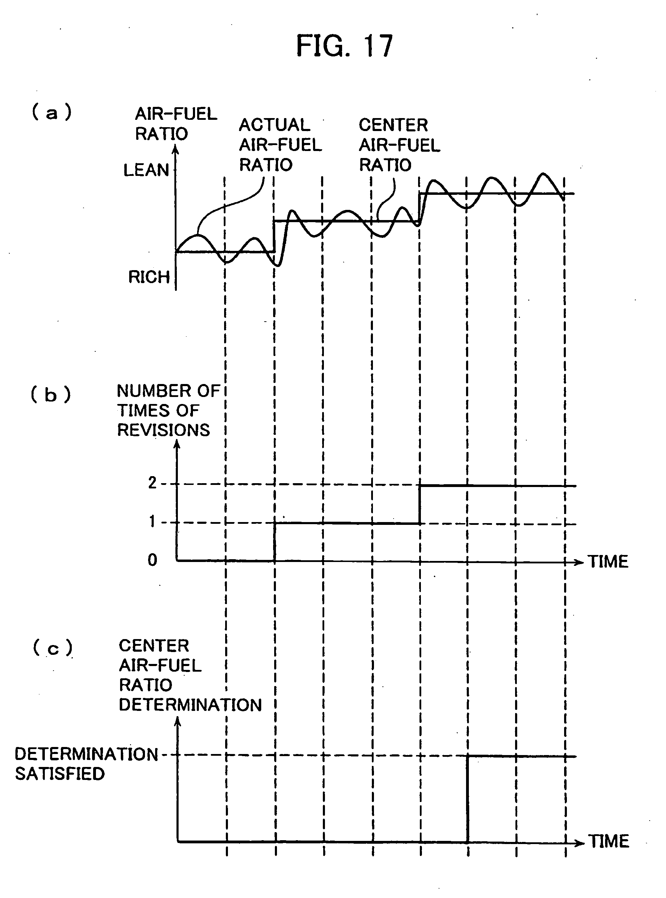

Figs. 17(a)-17(c) show, by way of example, time charts obtained when the flowchart shown in Fig. 16 is executed. Figs. 17(a)-17(c) represent respectively the air-fuel ratio, the number of times of revisions, and the determination result of the center air-fuel ratio.

In the illustrated case, the predetermined value for determining the number of times of revisions is set to 2. The determination of the center air-fuel ratio is kept satisfied during a period in which the center air-fuel ratio is not revised after the time at which the number of times of revisions has exceeded the predetermined value.

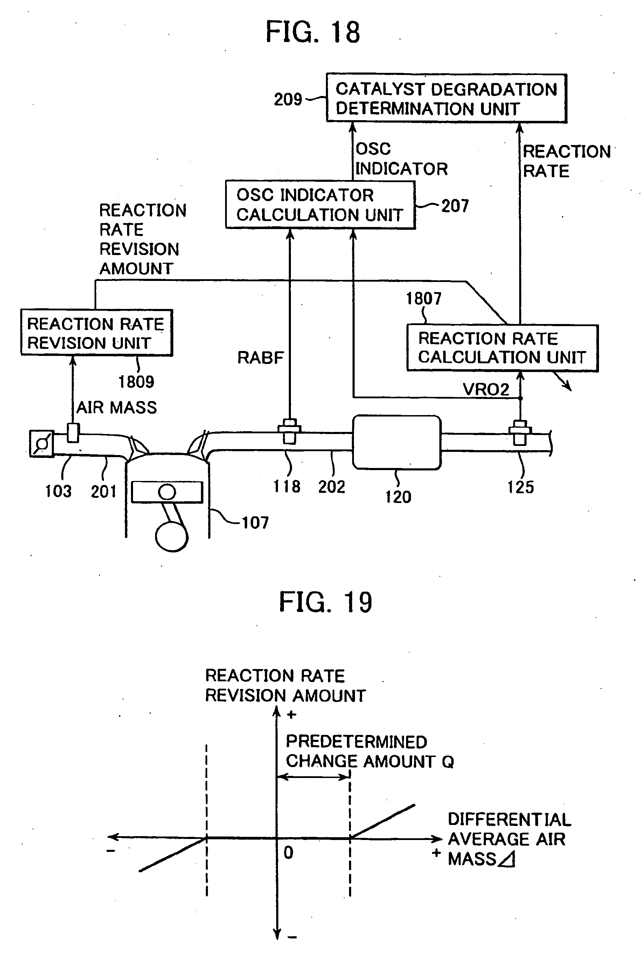

With reference to Fig. 18, the following description is made of a catalyst diagnosis apparatus according to a third embodiment of the present invention and an outline of an internal combustion engine to which is applied the catalyst diagnosis apparatus. Note that components in Fig. 18 corresponding to those in Fig. 2 are denoted by the same reference numerals and a description thereof is omitted here.

In this third embodiment, a reaction rate revision unit 1809 for revising the reaction rate based on the output of the airflow sensor 103 is added to the arrangement of the first embodiment.

A reaction rate calculation unit 1807 calculates the reaction rate in the three-way catalyst 120 based on the output VRO2 of the oxygen sensor 125, and then revises the calculated reaction rate in accordance with a reaction rate revision amount calculated by the reaction rate revision unit 1809.

With such a process, even when the reaction rate is changed during the period from the calculation of the reaction rate to the determination of the catalyst degradation, the determination of the catalyst degradation can be performed with high accuracy through the revision of the reaction rate.

Fig. 19 shows the relationship between the reaction rate revision amount and the intake air mass. The reaction rate revision amount is decided based on the difference between the average value of the intake air mass during the calculation of the reaction rate and the average value of the intake air mass during the calculation of the OSC indicator.

Here, the difference between those average values of the intake air masses is called differential average air mass Δ.

When the differential average air mass Δ is positive and larger than a predetermined change amount (value) Q, the reaction rate is revised to the increasing (positive) side. Conversely, when the differential average air mass Δ is negative and larger than the predetermined change amount Q, the reaction rate is revised to the decreasing (negative) side.

When the differential average air mass Δ is smaller than the predetermined change amount Q, the reaction rate is not revised. Because the reaction rate also depends on the fuel mass similarly to the intake air mass, the reaction rate revision amount may be decided based on the difference between average values of the fuel masses.

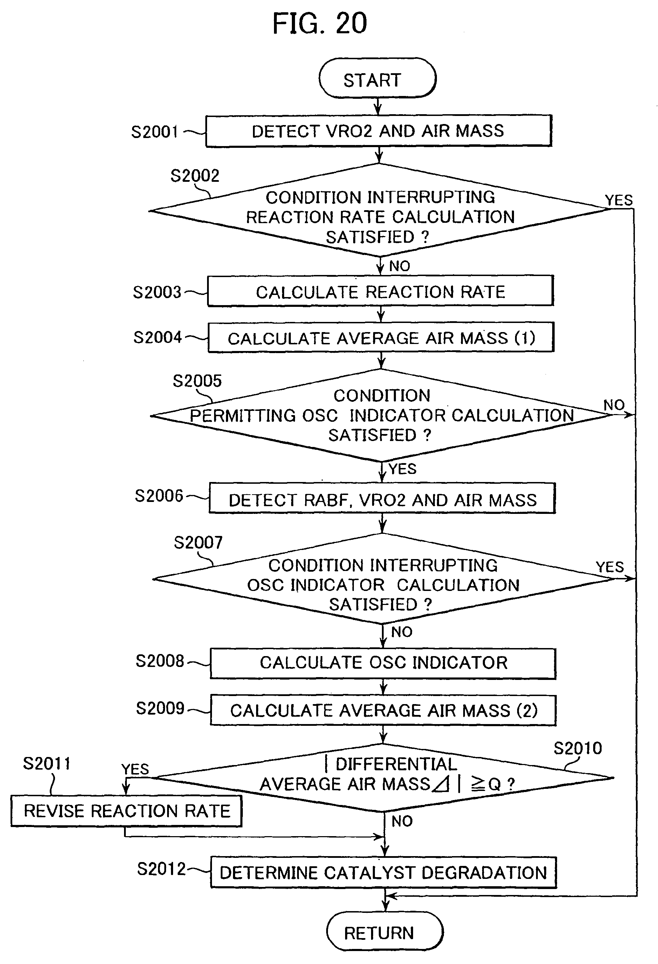

The operation flow of the catalyst diagnosis apparatus according to the third embodiment will be described below with reference to the flowchart shown in Fig. 20.

First, the oxygen sensor output VRO2 and the intake air mass are detected (step S2001).

Then, it is determined as to whether a condition interrupting the reaction rate calculation is satisfied (step S2002). If the condition interrupting the reaction rate calculation is not satisfied, the control process advances to step S2003 and so on, while if satisfied, the control process is brought to an end. The condition interrupting the reaction rate calculation includes, for example, that the oxygen sensor output VRO2 and the intake air mass are detected in the fuel-cut mode.

If the condition interrupting the reaction rate calculation is not satisfied, the detected oxygen sensor output VRO2 is subjected to buffering and the reaction rate is calculated based on data obtained through the buffering of the oxygen sensor output VRO2 for a predetermined time (step 2003).

Then, the average value of the intake air mass during the calculation of the reaction rate is calculated to obtain an average air mass (1) (step S2004).

Then, it is determined as to whether a condition permitting the OSC indicator calculation is satisfied (step S2005). If the condition permitting the OSC indicator calculation is satisfied, the control process advances to step S2006 and so on, while if not satisfied, the control process is brought to an end.

If the permitting condition is satisfied, the air-fuel ratio sensor output RABF, the oxygen sensor output VRO2, and the intake air mass are detected (step S2006).

Then, it is determined as to whether a condition interrupting the OSC indicator calculation is satisfied (step S2007). If the interrupting condition is not satisfied, the control process advances to step S2008 and so on, while if satisfied, the control process is brought to an end. The interrupting condition includes, for example, that the air-fuel ratio sensor output RABF, the oxygen sensor output VRO2, and the intake air mass are detected during the fuel-cut mode.

If the interrupting condition is not satisfied, the OSC indicator is calculated based on the detected air-fuel ratio sensor output RABF and oxygen sensor output VRO2 (step S2008).

Then, the average value of the intake air mass during the calculation of the OSC indicator is calculated to obtain the average air mass (2) (step S2009).

Then, the difference between the average air mass (1) and (2) is calculated as the differential average air mass Δ, and it is determined as to whether the absolute value of the differential average air mass Δ is equal to or larger than a predetermined value (change amount) Q (step S2010). If the absolute value of the differential average air mass Δ is equal to or larger than the predetermined value Q, the reaction rate is revised based on the differential average air mass Δ (step S2011). Thereafter, the determination of the catalyst degradation is executed (step S2012).

On the other hand, if the absolute value of the differential average air mass Δ is smaller than the predetermined value Q, the reaction rate is not revised and the determination of the catalyst degradation is executed at once (step S2013).

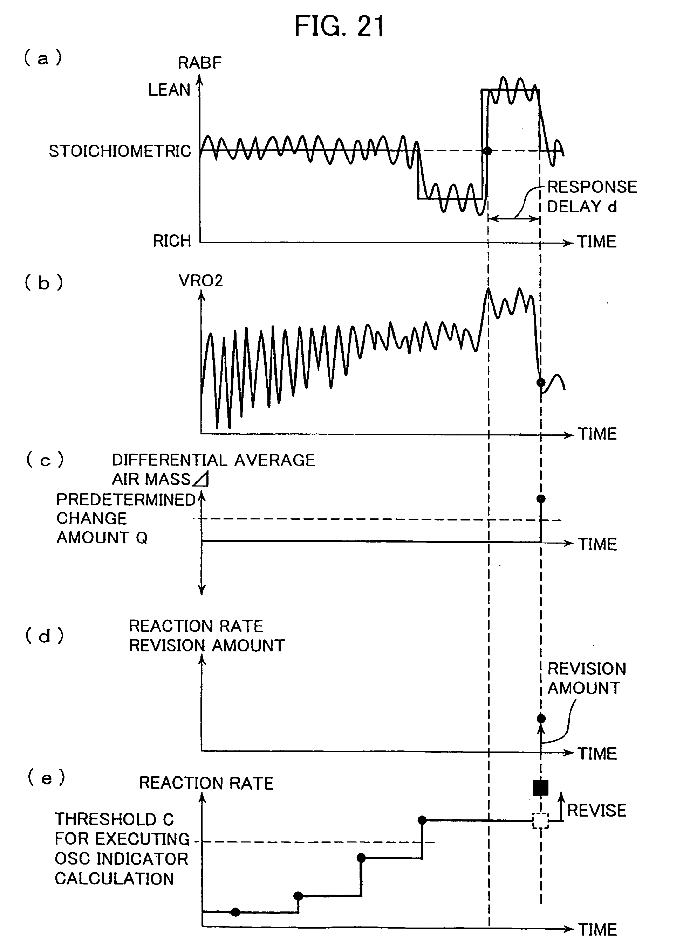

Figs. 21(a)-21(e) show, by way of example, time charts obtained when the flowchart shown in Fig. 20 is executed. Figs. 21(a)-21(e) represent respectively the air-fuel ratio sensor output RABF, the oxygen sensor output VRO2, the differential average air mass Δ, the reaction rate revision amount, and the reaction rate.

At the time when the reaction rate exceeds the threshold C for executing the calculation of the OSC indicator, the value of the reaction rate at that time is held. Thereafter, the calculation of the reaction rate is not executed and the calculation of the OSC indicator is executed.

However, if the differential average air mass Δ is equal to or larger than the predetermined change amount Q when the calculation of the OSC indicator is completed, the reaction rate is revised in accordance with the reaction rate revision amount based on the differential average air mass Δ.

The advantages of the above-described catalyst diagnosis apparatus according to the present invention are as follows.

(1) Since the OSC indicator calculation unit for calculating the OSC indicator of the three-way catalyst and the reaction rate calculation unit for calculating the reaction rate of chemical reaction are combined with each other, the determination of the catalyst degradation can be performed with higher accuracy in a manner adapted for characteristic changes of the catalyst caused by influences of external environment, etc.

(2) Since the OSC indicator calculation unit and the reaction rate calculation unit are operated during control of the center air-fuel ratio by using the air-fuel ratio control unit, the center air-fuel ratio calculation unit, and the center air-fuel ratio determination unit, the performance of the OSC indicator calculation unit and the reaction rate calculation unit can be increased and the accuracy in the determination of the catalyst degradation can be increased.

(3) Since the reaction rate is calculated before calculating the OSC indicator, the determination of the catalyst degradation can be avoided from being uselessly executed, for example, in an inactive state of the three-way catalyst, and the accuracy in the determination of the catalyst degradation can be increased.

(4) When the reaction rate is smaller than the predetermined value, this means that the three-way catalyst is not activated. By inhibiting the calculation of the reaction rate in such a state, useless determination of the catalyst degradation can be restricted and the accuracy in the determination of the catalyst degradation can be increased.

(5) Since the reaction rate is calculated based on the variation in the output of the oxygen sensor disposed downstream of the three-way catalyst, the reaction rate can be obtained with high accuracy, and the accuracy in the determination of the catalyst degradation can be increased.

(6) Since the reaction rate is calculated based on at least one of parameters for the output of the oxygen sensor, including the output amplitude, the standard deviation of the output, the comparison result between the maximum value and the minimum value of the output, and the number of times at which the peak value of the output exceeds the predetermined range, the accuracy in the calculation of the reaction rate can be increased.

(7) When the air-fuel ratio deviates from the center air-fuel ratio beyond the predetermined control range, the calculation of the reaction rate is stopped. It is hence possible to prevent deterioration of the accuracy in the calculation of the reaction rate and to restrict a useless determination of the catalyst degradation.

(8) When the air-fuel ratio deviates from the center air-fuel ratio beyond the predetermined control range and is returned again to the predetermined control range, the calculation of the reaction rate is inhibited for the predetermined time. It is hence possible to prevent deterioration of the accuracy in the calculation of the reaction rate and to restrict a useless determination of the catalyst degradation.

(9) When the reaction rate is changed until the calculation of the OSC indicator is completed after the calculation of the reaction rate, the reaction rate is revised. Accordingly, a deterioration of the accuracy in the determination of the catalyst degradation can be prevented.

(10) The reaction rate is revised based on the difference between the average value of the intake air mass during the calculation of the OSC indicator and the average value of the intake air mass during the calculation of the reaction rate, or the difference in the average value of the fuel mass between those two calculations. Therefore, a more precise reaction rate can be obtained, and a deterioration of the accuracy in the determination of the catalyst degradation can be prevented.

(11) Since the control unit for the internal combustion engine includes the catalyst degradation determination unit capable of being adapted for characteristic changes of the catalyst caused by influences of external environment, etc., a deterioration of exhaust gas from an automobile can be prevented. By practicing the present invention, it is possible to improve the accuracy in the determination of the catalyst degradation and to enlarge the region enabling the determination of the catalyst degradation to be executed. As a result, the performance of catalyst diagnosis can be increased.

**Claims**

1. Catalyst diagnosis apparatus for internal combustion engines (107) including a three-way catalyst (120) disposed in the exhaust passage (119), an air-fuel ratio sensor (118) for detecting the air-fuel ratio in the exhaust gas upstream of the three-way catalyst (120), and an oxygen sensor (125) for detecting the oxygen density in the exhaust gas downstream of the three-way catalyst (120), the catalyst diagnosis apparatus determining a degradation of the three-way catalyst and comprising:

   an OSC indicator calculation unit (207) for calculating an OSC indicator indicating the oxygen storage capacity (OSC) of the three-way catalyst (120) based on the output (RABF) of the air-fuel ratio sensor (118) and the output (VRO2) of the oxygen sensor (125), and
   a catalyst degradation determination unit (209) for determining a degradation of the three-way catalyst (120) based on the OSC indicator calculated by the OSC indicator calculation unit (207),

   **characterized in that**

   - the catalyst diagnosis apparatus comprises a reaction rate calculation unit (208) for calculating the reaction rate of a chemical reaction in the three-way catalyst (120) based on the output (VRO2) of the oxygen sensor (125), and

- the catalyst degradation determination unit (209) is adapted to determine a degradation of the three-way catalyst (120) based on the reaction rate calculated by the reaction rate calculation unit (208) and the OSC indicator calculated by the OSC indicator calculating unit (207).

2. Catalyst diagnosis apparatus according to claim 1,
   **characterized in that** the OSC indicator calculation unit (207) is adapted to calculate the OSC indicator based on the response delay time (d) from the time at which the output of the air-fuel ratio sensor (118) is reversed from a rich state to a lean state, until the time at which the output of the oxygen sensor (125) reaches a predetermined lean-determination threshold (B).

3. Catalyst diagnosis apparatus according to claim 1 or 2,
   **characterized in that**

   - an airflow sensor (103) for detecting the intake air mass is provided in the intake passage (201),
   - the air-fuel ratio sensor (118) is a linear air-fuel ratio sensor,
   - a center air-fuel ratio calculation unit (1108) is provided for calculating a center air-fuel ratio based on outputs of the airflow sensor (103), the linear air-fuel ratio sensor (118), and the oxygen sensor (125),
   - an air-fuel ratio control unit (1110) is provided for controlling the air-fuel ratio based on the outputs of the airflow sensor (103), the linear air-fuel ratio sensor (118), the oxygen sensor (125), and the center air-fuel ratio calculation unit (1108),
   - a center air-fuel ratio determination unit (1109) is provided for determining based on the output of the center air-fuel ratio calculation unit (1108) whether the center air-fuel ratio is correctly calculated, and
   - the reaction rate calculation unit (1112) is adapted to calculate the reaction rate of the chemical reaction in the three-way catalyst (120) based on the output (VRO2) of the oxygen sensor (125) when the center air-fuel ratio determination unit (1109) determines that the center air-fuel ratio is correctly calculated,
   - the OSC indicator calculation unit (1111) is adapted to calculate the OSC indicator based on the output (RABF) of the linear air-fuel ratio sensor (118), the output (VRO2) of the oxygen sensor (125), and the center air-fuel ratio calculation unit (1108) when the center air-fuel ratio determination unit (1109) determines that the center air-fuel ratio is correctly calculated, and
   - the catalyst degradation determination unit (209) is adapted to determine a degradation of the three-way catalyst (120) based on the reaction rate calculated by the reaction rate calculation unit (1112) and the OSC indicator calculated by the OSC indicator calculation unit (1111).

4. Catalyst diagnosis apparatus according to any of claims 1 to 3, **characterized in that** the reaction rate calculation unit (208) calculates the reaction rate before the OSC indicator calculation unit (207) calculates the OSC indicator.

5. Catalyst diagnosis apparatus according to any of claims 1 to 4, **characterized in that** the OSC indicator calculation unit (1111) is adapted to inhibit the calculation of the OSC indicator when the reaction rate calculated by the reaction rate calculation unit (1112) is not larger than a predetermined value.

6. Catalyst diagnosis apparatus according to any of claims 1 to 5, **characterized in that** the reaction rate calculation unit (1112) is adapted to calculate the reaction rate based on the variation in the output (VR02) of the oxygen sensor (125).

7. Catalyst diagnosis apparatus according to any of claims 1 to 6, **characterized in that** the reaction rate calculation unit (1112) is adapted to calculate the reaction rate based on at least one of parameters related to the output (VRO2) of the oxygen sensor (125), including the amplitude, the standard deviation, the comparison result between a maximum value and a minimum value, and the number of times at which a peak value exceeds a predetermined range.

8. Catalyst diagnosis apparatus according to any of claims 3 to 7, **characterized in that** the center air-fuel ratio determination unit (1109) is adapted to determine whether the center air-fuel ratio is correctly calculated, depending on whether the air-fuel ratio exceeds a predetermined control range with respect to the center air-fuel ratio calculated by the center air-fuel ratio calculation unit (1108), and the reaction rate calculation unit (1112) is adapted to stop the calculation of the reaction rate when the air-fuel ratio exceeds the predetermined control range with respect to the center air-fuel ratio.

9. Catalyst diagnosis apparatus according to claim 8, **characterized in that** the reaction rate calculation unit (1112) is adapted to continuously stop the calculation of the reaction rate even after the air-fuel ratio has returned to the predetermined control range with respect to the center air-fuel ratio, until a predetermined time is lapsed from the time of returning to the predetermined control range.

10. Catalyst diagnosis apparatus according to any of claims 1 to 9, **characterized in that** it further comprises a reaction rate revision unit (1809) for revising the reaction rate calculated by the reaction rate calculation unit (1112; 1807).

11. Catalyst diagnosis apparatus according to claim 10, **characterized in that** the reaction rate revision unit (1809) is adapted to revise the reaction rate based on the difference between an average of the intake air mass during the calculation of the OSC indicator and an average of the intake air mass during the calculation of the reaction rate, and/or the difference between an average of the fuel mass during the calculation of the OSC indicator and an average of the fuel mass during the calculation of the reaction rate.

12. Automobile, comprising an internal combustion engine (107), **characterized in that** it includes a catalyst diagnosis apparatus according to any of claims 1 to 11.

**Patentansprüche**

1. Katalysatordiagnosevorrichtung für Brennkraftmaschinen (107), die aufweist:

einen Dreiwegekatalysator (120), der im Abgaskanal (119) vorgesehen ist, einen Sensor (118) für das Luft-Kraftstoff-Verhältnis zur Erfassung des Luft-Kraftstoff-Verhältnisses im Abgas stromaufwärts vom Dreiwegekatalysator (120) und einen Sauerstoffsensor (125) zur Erfassung der Sauerstoffdichte im Abgas stromabwärts vom Dreiwegekatalysator (120),

wobei die Katalysatordiagnosevorrichtung eine Verschlechterung des Dreiwegekatalysators erfasst und aufweist:

eine OSC-Indikator-Berechnungseinheit (207) zur Berechnung eines OSC-Indikators, der die Sauerstoff-Speicherkapazität (OSC) des Dreiwegekatalysators (120) anzeigt, auf der Basis des Ausgangs (RABF) des Sensors (118) für das Luft-Kraftstoff-Verhältnis und des Ausgangs (VRO2) des Sauerstoffsensors (125) und
eine Ermittlungseinheit (209) für eine Katalysatorverschlechterung zur Ermittlung einer Verschlechterung des Dreiwegekatalysators (120) auf der Basis
des von der OSC-Indikator-Berechnungseinheit (207) berechneten OSC-Indikators,

**dadurch gekennzeichnet, dass**

- die Katalysatordiagnosevorrichtung eine Reaktionsgeschwindigkeits-Berechnungseinheit (208) zur Berechnung der Reaktionsgeschwindigkeit einer chemischen Reaktion im Dreiwegekatalysator (120) auf der Basis des Ausgangs (VRO2) des Sauerstoffsensors (125) aufweist
und
- die Ermittlungseinheit (209) für eine Katalysatorverschlechterung so ausgebildet ist, dass sie eine Verschlechterung des Dreiwegekatalysators (120) auf der Basis der von der Reaktionsgeschwindigkeits-Berechnungseinheit (208) berechneten Reaktionsgeschwindigkeit und des von der OSC-Indikator-Berechnungseinheit (207) berechneten OSC-Indikators ermittelt.

2. Katalysatordiagnosevorrichtung nach Anspruch 1,
**dadurch gekennzeichnet, dass** die OSC-Indikator-Berechnungseinheit (207) so ausgebildet ist, dass sie den OSC-Indikator berechnet auf der Basis der Ansprechverzögerungszeit (d) von dem Zeitpunkt, an dem der Ausgang des Sensors (118) für das Luft-Kraftstoff-Verhältnis von einem Wert für fetten Gemischzustand in einen Wert für mageren Gemischzustand übergeht, bis zum dem Zeitpunkt, an dem der Ausgang des Sauerstoffsensors (125) einen vorgegebenen, der Ermittlung des mageren Gemischzustands dienenden Schwellenwert (B) erreicht.

3. Katalysatordiagnosevorrichtung nach Anspruch 1 oder 2,
**dadurch gekennzeichnet, dass**

- ein Luftmengensensor (103) zur Erfassung der Ansaugluftmasse im Ansaugkanal (201) vorgesehen ist,
- der Sensor (118) für das Luft-Kraftstoff-Verhältnis ein linearer Sensor für das Luft-Kraftstoff-Verhältnis ist,

- eine Berechnungseinheit (1108) für den Zentralwert des Luft-Kraftstoff Verhältnisses zur Berechnung eines Zentralwerts des Luft-Kraftstoff-Verhältnisses auf der Basis der Ausgänge des Luftmengensensors (103), des linearen Sensors (118) für das Luft-Kraftstoff-Verhältnis und des Sauerstoffsensors (125) vorgesehen ist,

- eine Steuereinheit (1110) für das Luft-Kraftstoff-Verhältnis zur Steuerung des Luft-Kraftstoff-Verhältnisses auf der Basis der Ausgänge des Luftmengensensors (103), des linearen Sensors (118) für das Luft-Kraftstoff-Verhältnis, des Sauerstoffsensors (125) und der Berechnungseinheit (1108) für Zentralwert des Luft-Kraftstoff-Verhältnisses vorgesehen ist,

- eine Ermittlungseinheit (1109) für den Zentralwert des Luft-Kraftstoff-Verhältnisses vorgesehen ist, die dazu dient, auf der Basis des Ausgangs der Berechnungseinheit (1108) für den Zentralwert des Luft-Kraftstoff-Verhältnisses zu ermitteln, ob der Zentralwert des Luft-Kraftstoff-Verhältnisses richtig berechnet ist, und

- die Reaktionsgeschwindigkeits-Berechnungseinheit (1112) so ausgebildet ist, da sie die Reaktionsgeschwindigkeit der chemischen Reaktion im Dreiwegekatalysator (120) auf der Basis des Ausgangs (VRO2) des Sauerstoffsensors (125) berechnet, wenn die Ermittlungseinheit (1109) für den Zentralwert des Luft-Kraftstoff-Verhältnisses ermittelt, dass der Zentralwert des Luft-Kraftstoff-Verhältnisses richtig berechnet ist,

- die OSC-Indikator-Berechnungseinheit (1111) so ausgebildet ist, dass sie den OSC-Indikator auf der Basis des Ausgangs (RABF) des linearen Sensors (118) für das Luft-Kraftstoff-Verhältnis, des Ausgangs (VRO2) des Sauerstoffsensors (125) und der Berechnungseinheit (1108) für den Zentralwert des Luft-Kraftstoff-Verhältnisses berechnet, wenn die Ermittlungseinheit (1109) für den Zentralwert des Luft-Kraftstoff-Verhältnisses ermittelt, dass der Zentralwert des Luft-Kraftstoff-Verhältnisses richtig berechnet ist, und

- die Ermittlungseinheit (209) für eine Katalysatorverschlechterung so ausgebildet ist, dass sie eine Verschlechterung des Dreiwegekatalysators auf der Basis der von der Reaktionsgeschwindigkeits-Berechnungseinheit (1112) berechneten Reaktionsgeschwindigkeit und des von der OSC-Indikator-Berechnungseinheit (1111) berechneten OSC-Indikators ermittelt.

4. Katalysatordiagnosevorrichtung nach einem oder mehreren der Ansprüche 1 bis 3, **dadurch gekennzeichnet, dass** die Reaktionsgeschwindigkeits-Berechnungseinheit (208) die Reaktionsgeschwindigkeit berechnet, bevor die OSC-Indikator-Berechnungseinheit (207) den OSC-Indikator berechnet.

5. Katalysatordiagnosevorrichtung nach einem oder mehreren der Ansprüche 1 bis 4, **dadurch gekennzeichnet, dass** die OSC-Indikator-Berechnungseinheit (1111) so ausgebildet ist, dass die Berechnung des OSC-Indikators unterdrückt wird, wenn die von der Reaktionsgeschwindigkeits-Berechnungseinheit (1112) berechnete Reaktionsgeschwindigkeit nicht größer ist als ein vorgegebener Wert.

6. Katalysatordiagnosevorrichtung nach einem oder mehreren der Ansprüche 1 bis 5, **dadurch gekennzeichnet, dass** die Reaktionsgeschwindigkeits-Berechnungseinheit (1112) so ausgebildet ist, dass sie die Reaktionsgeschwindigkeit auf der Basis der Variation im Ausgang (VRO2) des Sauerstoffsensors (125) berechnet.

7. Katalysatordiagnosevorrichtung nach einem oder mehreren der Ansprüche 1 bis 6, **dadurch gekennzeichnet, dass** die Reaktionsgeschwindigkeits-Berechnungseinheit (1112) so ausgebildet ist, dass sie die Reaktionsgeschwindigkeit auf der Basis mindestens eines der mit dem Ausgang (VRO2) des Sauerstoffsensors (125) in Beziehung stehenden Parameter berechnet, zu denen die Amplitude, die Standardabweichung, das Ergebnis des Vergleichs zwischen einem Maximalwert und einem Minimalwert und die Anzahl gehören, wie viele Male ein Peakwert einen vorgegebenen Bereich übersteigt.

8. Katalysatordiagnosevorrichtung nach einem oder mehreren der Ansprüche 3 bis 7, **dadurch gekennzeichnet, dass** die Ermittlungseinheit (1109) für den Zentralwert des Luft-Kraftstoff-Verhältnisses so ausgebildet ist, dass sie in Abhängigkeit davon, ob das Luft-Kraftstoff-Verhältnis einen vorgegebenen Steuerbereich in Bezug auf den von der Berechnungseinheit (1108) für den Zentralwert des Luft-Kraftstoff-Verhältnisses berechneten Zentralwert des Luft-Kraftstoff-Verhältnisses übersteigt, ermittelt, ob der Zentralwert des Luft-Kraftstoff-Verhältnisses richtig berechnet ist, und die Reaktionsgeschwindigkeits-Berechnungseinheit (1112) so ausgebildet ist, dass sie die Berechnung der Reaktionsgeschwindigkeit unterbricht, wenn das Luft-Kraftstoff-Verhältnis den vorgegebenen Steuerbereich in Bezug auf den Zentralwert des Luft-Kraftstoff-Verhältnisses übersteigt.

9. Katalysatordiagnosevorrichtung nach Anspruch 8, **dadurch gekennzeichnet, dass** die Reaktionsgeschwindigkeits-Berechnungseinheit (1112) so ausgebildet ist, dass sie die Berechnung der Reaktionsgeschwindigkeit auch dann fortlaufend unterbricht, wenn das Luft-Kraftstoff-Verhältnis zum vorgegebenen Steuerbereich in Bezug auf den Zentralwert des Luft-Kraftstoff-Verhältnis zurückgekehrt ist, bis eine vorgegebene Zeit vom Zeitpunkt der Rückkehr zum vorgegebenen Steuerbereich verstrichen ist.

**10.** Katalysatordiagnosevorrichtung nach einem oder mehreren der Ansprüche 1 bis 9,
**dadurch gekennzeichnet, dass** sie ferner eine Reaktionsgeschwindigkeits-Revisionseinheit (1809) zur Revision der von der Reaktionsgeschwindigkeits-Berechnungseinheit (1112; 1807) berechneten Reaktionsgeschwindigkeit aufweist.

**11.** Katalysatordiagnosevorrichtung nach Anspruch 10,
**dadurch gekennzeichnet, dass** die Reaktionsgeschwindigkeits-Revisionseinheit (1809) so ausgebildet ist, dass sie eine Revision der Reaktionsgeschwindigkeit durchführt auf der Basis der Differenz zwischen einem Mittelwert der Ansaugluftmasse während der Berechnung des OSC-Indikators und einem Mittelwert der Ansaugluftmasse während der Berechnung der Reaktionsgeschwindigkeit und/oder auf der Basis der Differenz zwischen einem Mittelwert der Kraftstoffmasse während der Berechnung des OSC-Indikators und einem Mittelwert der Kraftstoffmasse während der Berechnung der Reaktionsgeschwindigkeit.

**12.** Automobil, das eine Brennkraftmaschine (107) aufweist,
**dadurch gekennzeichnet, dass** sie eine Katalysatordiagnosevorrichtung nach einem oder mehreren der Ansprüche 1 bis 11 aufweist.

## Revendications

**1.** Appareil de diagnostic de catalyseur pour moteur à combustion interne (107) incluant un catalyseur à trois voies (120) disposé dans le passage d'échappement (119), un capteur de rapport air-carburant (118) destiné à détecter le rapport air-carburant dans le gaz d'échappement en amont du catalyseur à trois voies (120), et un capteur d'oxygène (125) destiné à détecter la densité d'oxygène dans les gaz d'échappement en aval du catalyseur à trois voies (120), l'appareil de diagnostic de catalyseur déterminant une dégradation du catalyseur à trois voies et comprenant :

une unité de calcul d'un indicateur de CSO (207) destinée à calculer un indicateur de CSO indiquant la capacité de stockage d'oxygène (CSO) du catalyseur à trois voies (120) sur la base de la sortie (RABF) du capteur de rapport air-carburant (118) et de la sortie (VRO2) du capteur d'oxygène (125), et
une unité de détermination d'une dégradation du catalyseur (209) destinée à déterminer une dégradation du catalyseur à trois voies (120) sur la base de l'indicateur de CSO calculé par l'unité de calcul d'un indicateur de CSO (207), **caractérisé en ce que**

- l'appareil de diagnostic de catalyseur comprend une unité de calcul de la vitesse de réaction (208) destinée à calculer la vitesse de réaction d'une réaction chimique dans le catalyseur à trois voies (120) sur la base de la sortie (VR02) du capteur d'oxygène (125),
et
- l'unité de détermination d'une dégradation du catalyseur (209) est adaptée pour déterminer une dégradation du catalyseur à trois voies (120) sur la base de la vitesse de réaction calculée par l'unité de calcul de la vitesse de réaction (208) et de l'indicateur de CSO calculé par l'unité de calcul d'un indicateur de CSO (207).

**2.** Appareil de diagnostic de catalyseur selon la revendication 1,
**caractérisé en ce que** l'unité de calcul d'un indicateur de CSO (207) est adaptée pour calculer l'indicateur de CSO sur la base du temps d'attente de réponse (d) à partir du moment où la sortie du capteur de rapport air-carburant (118) est inversée pour passer d'un état riche à un état pauvre, jusqu'au moment où la sortie du capteur d'oxygène (125) atteint un seuil prédéterminé de détermination de l'état pauvre (B).

**3.** Appareil de diagnostic de catalyseur selon la revendication 1 ou 2,
**caractérisé en ce que**

- un débitmètre d'air (103) destiné à détecter la masse d'air d'admission est prévu dans le passage d'admission (201),

- le capteur de rapport air-carburant (118) est un capteur de rapport air-carburant linéaire,
- une unité de calcul du rapport air-carburant central (1108) est fournie pour calculer un rapport air-carburant central sur la base des sorties du débitmètre d'air (103), du capteur de rapport air-carburant linéaire (118) et du capteur d'oxygène (125),
- une unité de contrôle du rapport air-carburant (1110) est prévue pour contrôler le rapport air-carburant sur la base des sorties du débitmètre (103), du capteur de rapport air-carburant linéaire (118), du capteur d'oxygène (125) et de l'unité de calcul du rapport air-carburant central (1108),
- une unité de détermination du rapport air-carburant central (1109) est fournie pour déterminer, sur la base de la sortie de l'unité de calcul du rapport air-carburant central (1108), si le rapport air-carburant central est calculé correctement,
- l'unité de calcul de la vitesse de réaction (1112) est adaptée pour calculer la vitesse de réaction de la réaction chimique dans le catalyseur à trois voies (120) sur la base de la sortie (VRO2) du capteur d'oxygène (125) quand l'unité de détermination du rapport air-carburant central (1109) détermine que le rapport air-carburant central est calculé correctement,
- l'unité de calcul d'un indicateur de CSO (1111) est adaptée pour calculer l'indicateur de CSO sur la base de la sortie (RABF) du capteur de rapport air-carburant linéaire (118), de la sortie (VRO2) du capteur d'oxygène (125) et de l'unité de calcul du rapport air-carburant central (1108) quand l'unité de détermination du rapport air-carburant central (1109) détermine que le rapport air-carburant est calculé correctement, et
- l'unité de détermination d'une dégradation du catalyseur (209) est adaptée pour déterminer une dégradation du catalyseur à trois voies (120) sur la base de la vitesse de réaction calculée par l'unité de calcul de la vitesse de réaction (1112) et de l'indicateur de CSO calculé par l'unité de calcul d'un indicateur de CSO (1111).

4. Appareil de diagnostic de catalyseur selon l'une quelconque des revendications 1 à 3, **caractérisé en ce que** l'unité de calcul de la vitesse de réaction (208) calcule la vitesse de réaction avant que l'unité de calcul d'un indicateur de CSO (207) ne calcule l'indicateur de CSO.

5. Appareil de diagnostic de catalyseur selon l'une quelconque des revendications 1 à 4, **caractérisé en ce que** l'unité de calcul d'un indicateur de CSO (1111) est adaptée pour empêcher le calcul de l'indicateur de CSO quand la vitesse de réaction calculée par l'unité de calcul de la vitesse de réaction (1112) n'est pas supérieure à une valeur prédéterminée.

6. Appareil de diagnostic de catalyseur selon l'une quelconque des revendications 1 à 5, **caractérisé en ce que** l'unité de calcul de la vitesse de réaction (1112) est adaptée pour calculer la vitesse de réaction sur la base de la variation de la sortie (VRO2) du capteur d'oxygène (125).

7. Appareil de diagnostic de catalyseur selon l'une quelconque des revendications 1 à 6, **caractérisé en ce que** l'unité de calcul de la vitesse de réaction (1112) est adaptée pour calculer la vitesse de réaction sur la base d'au moins l'un des paramètres liés à la sortie (VRO2) du capteur d'oxygène (125), notamment l'amplitude, l'écart standard, le résultat de comparaison entre une valeur maximale et une valeur minimale, et le nombre de fois où une valeur de pointe dépasse une plage prédéterminée.

8. Appareil de diagnostic de catalyseur selon l'une quelconque des revendications 3 à 7, **caractérisé en ce que** l'unité de détermination du rapport air-carburant central (1109) est adaptée pour déterminer si le rapport air-carburant central est calculé correctement, selon que le rapport air-carburant dépasse ou non une plage de contrôle prédéterminée en ce qui concerne le rapport air-carburant central calculé par l'unité de calcul du rapport air-carburant central (1108) et l'unité de calcul de la vitesse de réaction (1112) est adaptée pour arrêter le calcul de la vitesse de réaction quand le rapport air-carburant dépasse la plage de contrôle prédéterminée en ce qui concerne le rapport air-carburant central.

9. Appareil de diagnostic de catalyseur selon la revendication 8, **caractérisé en ce que** l'unité de calcul de la vitesse de réaction (1112) est adaptée pour arrêter de manière continue le calcul de la vitesse de réaction même après le retour du rapport air-carburant à la plage de contrôle prédéterminée en ce qui concerne le rapport air-carburant central, jusqu'à ce qu'un temps prédéterminé se soit écoulé à partir du moment du retour à la plage de contrôle prédéterminée.

10. Appareil de diagnostic de catalyseur selon l'une quelconque des revendications 1 à 9, **caractérisé en ce qu'**il comprend en outre une unité de révision de la vitesse de réaction (1809) destinée à réviser la vitesse de réaction calculée par l'unité de calcul de la vitesse de réaction (1112 ; 1807).

**11.** Appareil de diagnostic de catalyseur selon la revendications 10, **caractérisé en ce que** l'unité de révision de la vitesse de réaction (1809) est adaptée pour réviser la vitesse de réaction sur la base de la différence entre une moyenne de la masse d'air d'admission durant le calcul de l'indicateur de CSO et une moyenne de la masse d'air d'admission durant le calcul de la vitesse de réaction, et/ou la différence entre une moyenne de la masse de carburant durant le calcul de l'indicateur de CSO et une moyenne de la masse de carburant durant le calcul de la vitesse de réaction.

**12.** Automobile comprenant un moteur à combustion interne (107), **caractérisée en ce qu'**elle inclut un appareil de diagnostic de catalyseur selon l'une quelconque des revendications 1 à 11.

FIG. 1

# FIG. 2

EP 1 748 165 B1

# FIG. 3

START

↓

DETECT VRO2 — S301

↓

CALCULATE
REACTION RATE — S302

↓

S303 — CONDITION
PERMITTING OSC
INDICATOR CALCULATION
SATISFIED ?  — NO →

↓ YES

DETECT RABF AND
VRO2 — S304

↓

S305 — CONDITION
INTERRUPTING OSC
INDICATOR CALCULATION
SATISFIED ?  — YES →

↓ NO

CALCULATE OSC
INDICATOR — S306

↓

DETERMINE CATALYST
DEGRADATION — S307

↓

RETURN

# FIG. 4

( a )

( b )

( c )

( d )

# FIG. 5

OSC
INDICATOR

NORMAL

DEGRADATION
DETERMINATION
THRESHOLD D

DEGRADED

REACTION RATE

RI

THRESHOLD C
FOR EXECUTING
OSC INDICATOR
CALCULATION

# FIG. 6

REACTION
RATE

OUTPUT VARIATION
(VARIATION OF VRO2)

# FIG. 7

OXYGEN SENSOR
OUTPUT (VRO2)

AVERAGE
VALUE

OUTPUT
VARIATION

TIME

# FIG. 8

OXYGEN SENSOR
OUTPUT (VRO2)

$Y_3$

$Y_1$

$Y_n$

AVERAGE
VALUE

$Y_{n-i}$

$Y_2$

TIME

# FIG. 9

OXYGEN SENSOR
OUTPUT (VRO2)

$Y_{max}$

OUTPUT
VARIATION
$Y_{max} - Y_{min}$

$Y_{min}$

TIME

# FIG. 10

OXYGEN SENSOR
OUTPUT (VRO2)

PREDETERMINED
RANGE

AVERAGE
VALUE

TIME

# FIG. 11

## FIG. 12

START

S1201 — CALCULATE CENTER AIR-FUEL RATIO

S1202 — CENTER AIR-FUEL RATIO DETERMINATION SATISFIED ? — NO

YES

S1203 — DETECT RABF AND VRO2

S1204 — CONTROLLED WITHIN PREDETERMINED AIR-FUEL RATIO RANGE ? — NO

YES

S1205 — PREDETERMINED TIME LAPSED AFTER RETURN TO PREDETERMINED RANGE ? — NO

YES

S1206 — CALCULATE REACTION RATE

S1207 — CONDITION PERMITTING OSC INDICATOR CALCULATION SATISFIED ? — NO

YES

S1208 — DETECT RABF, VRO2 AND CENTER AIR-FUEL RATIO

S1209 — CONDITION INTERRUPTING OSC INDICATOR CALCULATION SATISFIED ? — YES

NO

S1210 — CALCULATE OSC INDICATOR

S1211 — DETERMINE CATALYST DEGRADATION

RETURN

# FIG. 13

( a )  CENTER AIR-FUEL
       RATIO DETERMINATION

DETERMINATION
SATISFIED

TIME

( b )

RABF

CENTER
AIR-FUEL
RATIO

PREDETERMINED
AIR-FUEL RATIO
CONTROL RANGE

TIME

( c )

VRO2

TIME

( d )  REACTION
       RATE

THRESHOLD C
FOR EXECUTING
OSC INDICATOR
CALCULATION

TIME

t1

28

# FIG. 14

```
        ┌─────────────┐
        │    START    │
        └─────────────┘
               │
               ▼
   ┌───────────────────────┐
   │ MEASURE OXYGEN SENSOR │──── S1401
   │ OUTPUT (VRO2)         │
   └───────────────────────┘
               │
               ▼
   ┌───────────────────────┐
   │ CALCULATE OXYGEN      │──── S1402
   │ STORAGE VOLUME (VOS)  │
   └───────────────────────┘
               │
               ▼              S1403
              ╱╲
        NO  ╱ REVISION ╲
   ◄───────╱ CONDITION  ╲
          ╲ SATISFIED ? ╱
           ╲           ╱
             ╲╲      ╱╱
                │ YES
                ▼
   S1404     ╱╲
           ╱ VRO2>RVO2 ╲   YES
          ╱      &       ╲─────────┐
          ╲  VOS>LVOS   ╱          │
           ╲           ╱           ▼
             ╲╲      ╱╱    ┌────────────────────┐
                │          │ LEAN REVISION OF   │── S1405
                │ NO       │ CENTER AIR-FUEL    │
                ▼          │ RATIO              │
                           └────────────────────┘
                                   │
                                   ▼
                           ┌────────────────────┐
                           │ INCREMENT NUMBER OF│── S1408
                           │ TIMES OF REVISIONS │
                           │ BY ONE             │
                           └────────────────────┘
   S1406     ╱╲
           ╱ VRO2<LVO2 ╲   YES                      S1407
          ╱      &       ╲─────────────┐
          ╲  VOS<HVOS   ╱              │
           ╲           ╱               ▼
             ╲╲      ╱╱        ┌─────────────────────┐
                │              │ RICH REVISION OF    │
                │ NO           │ CENTER AIR-FUEL     │
                ▼              │ RATIO AVERAGE       │
                               │ VALUE OUTPUT        │
                               │ VARIATION TIME      │
                               └─────────────────────┘
                                       │
                                       ▼
                               ┌─────────────────────┐
                               │ INCREMENT NUMBER OF │
                               │ TIMES OF REVISIONS  │
                               │ BY ONE              │
                               └─────────────────────┘
                                       │
                                       │  S1408
        ┌─────────────┐
        │   RETURN    │
        └─────────────┘
```

# FIG. 15

(a)

(b) OXYGEN STORAGE
VOLUME

(c) RABF

(d) NUMBER OF TIMES
OF REVISIONS

# FIG. 16

```
                    ┌─────────────┐
                    │    START    │
                    └─────────────┘
                           │
                           ▼
                      ╱─────────╲           S1601
              NO    ╱  NUMBER OF  ╲
        ┌────────── ╱ TIMES OF REVISIONS ╲
        │          ╲ >PREDETERMINED ╱
        │           ╲    VALUE ?  ╱
        │            ╲─────────╱
        │                 │ YES
        │                 ▼
        │         ┌─────────────────┐
        │         │  DETECT CENTER  │── S1602
        │         │  AIR-FUEL RATIO │
        │         └─────────────────┘
        │                 │
        │                 ▼
        │            ╱─────────╲          S1603
        │   NO     ╱  PREVIOUS  ╲
        │ ◄─────── ╱ CENTER AIR-FUEL RATIO- ╲
        │         ╲ CURRENT CENTER AIR-FUEL ╱
        │          ╲   RATIO = 0 ? ╱
        │           ╲─────────╱
        │                 │ YES
   S1605│                 │
        ▼                 ▼
┌──────────────────┐  ┌──────────────────┐
│ CENTER AIR-FUEL  │  │ CENTER AIR-FUEL  │
│ RATIO            │  │ RATIO            │── S1604
│ DETERMINATION NOT│  │ DETERMINATION    │
│ SATISFIED ?      │  │ SATISFIED ?      │
└──────────────────┘  └──────────────────┘
        │                 │
        └────────►────────┤
                          ▼
                    ┌─────────────┐
                    │   RETURN    │
                    └─────────────┘
```

# FIG. 17

(a)

AIR-FUEL RATIO

ACTUAL AIR-FUEL RATIO    CENTER AIR-FUEL RATIO

LEAN

RICH

(b)

NUMBER OF TIMES OF REVISIONS

2

1

0 → TIME

(c)

CENTER AIR-FUEL RATIO DETERMINATION

DETERMINATION SATISFIED

→ TIME

# FIG. 18

209 — CATALYST DEGRADATION DETERMINATION UNIT

OSC INDICATOR

REACTION RATE

REACTION RATE REVISION AMOUNT

OSC INDICATOR CALCULATION UNIT —207

REACTION RATE REVISION UNIT

1807

REACTION RATE CALCULATION UNIT

1809

RABF

VRO2

AIR MASS

103  201

107

118  202

120

125

# FIG. 19

REACTION RATE REVISION AMOUNT

+

PREDETERMINED CHANGE AMOUNT Q

DIFFERENTIAL AVERAGE AIR MASS△

0

−

+

−

# FIG. 20

START

S2001 — DETECT VRO2 AND AIR MASS

S2002 — CONDITION INTERRUPTING REACTION RATE CALCULATION SATISFIED ? — YES

NO

S2003 — CALCULATE REACTION RATE

S2004 — CALCULATE AVERAGE AIR MASS (1)

S2005 — CONDITION PERMITTING OSC INDICATOR CALCULATION SATISFIED ? — NO

YES

S2006 — DETECT RABF, VRO2 AND AIR MASS

S2007 — CONDITION INTERRUPTING OSC INDICATOR CALCULATION SATISFIED ? — YES

NO

S2008 — CALCULATE OSC INDICATOR

S2009 — CALCULATE AVERAGE AIR MASS (2)

S2010 — | DIFFERENTIAL AVERAGE AIR MASS $\triangle$ | $\geqq$ Q ?

S2011 — YES — REVISE REACTION RATE

NO

S2012 — DETERMINE CATALYST DEGRADATION

RETURN

# FIG. 21

( a )

RABF

LEAN

STOICHIOMETRIC

RICH

RESPONSE DELAY d

TIME

( b )

VRO2

TIME

( c )

DIFFERENTIAL AVERAGE AIR MASS $\triangle$

PREDETERMINED CHANGE AMOUNT Q

TIME

( d )

REACTION RATE REVISION AMOUNT

REVISION AMOUNT

TIME

( e )

REACTION RATE

THRESHOLD C FOR EXECUTING OSC INDICATOR CALCULATION

REVISE

TIME

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11132031 A
- JP 6167210 A

- US 20020178714 A1